# EUROPEAN PATENT APPLICATION

(11) **EP 4 411 959 A1**
(43) Date of publication of application: **07.08.2024**
(21) Application number: 22874953.7
(22) Date of filing: 28.09.2022
(51) Int. Cl.: H01M 50/383, H01M 10/52, H01M 10/42

(54) **TREATMENT APPARATUS FOR THERMAL RUNAWAY FLUE GAS IN BATTERY, TREATMENT METHOD, BATTERY GROUP, AND BATTERY PACK**

(30) Priority: 29.09.2021 CN 202111154438; 29.12.2021 CN 202123379020 U; 26.04.2022 CN 202210446244; 26.04.2022 CN 202220980645 U; 26.04.2022 CN 202210446413; 26.04.2022 CN 202210446267; 01.06.2022 CN 202210618523; 30.06.2022 CN 202221665312 U; 30.06.2022 CN 202221665315 U; 01.09.2022 CN 202222329729 U
(71) Applicant: D-Aus Energy Storage Technology (Xi'an) Co., Ltd, Xi' An, Shaanxi 710075 (CN)
(72) Inventor: ZHANG, Sanxue, Xi' An, Shaanxi 710075 (CN); HAN, Xiaoyu, Xi' An, Shaanxi 710075 (CN); LEI, Zhengjun, Xi' An, Shaanxi 710075 (CN)
(74) Representative: Inchingalo, Simona
(86) International application number: PCT/CN2022/121982
(87) International publication number: WO 2023/051568

(57) **Abstract**

The present invention provides a thermal runaway flue gas treatment apparatus for battery, a treatment method, a battery group, and a battery pack, mainly solving the problem that existing treatment manners for thermal runaway flue gas in a battery are not thorough, have potential safety hazards, and pollute the environment. In the apparatus of the present invention, the thermal runaway flue gas generated by thermal runaway in the battery is ignited and combusted to treat combustible components in the thermal runaway flue gas, so that the combusted gas may not be ignited again, thereby fundamentally achieving the purpose of safety, while avoiding environmental pollution.

## Description

### Technical Field

The present invention belongs to the field of batteries, and particularly relates to a thermal runaway flue gas treatment apparatus for battery, a treatment method, a battery group, and a battery pack.

### Background

In recent years, with the further development of the field of lithium ion battery energy storage, the safe use of a lithium ion battery is provided with also received attention. Due to the principle and structural characteristics of the lithium ion battery, a large amount of heat is often generated due to internal resistance heating during repeated use, and the heat is gradually increased. If the accumulated heat is not effectively dissipated, the temperature is further increased. When the temperature reaches a limit, the thermal balance of the battery is destroyed, triggering a series of self-heating side reactions, generating a large amount of combustible gas, leading to a phenomenon of "thermal runaway", and ultimately leading to a fire inside the battery, and in severe cases, an explosion to cause a hidden danger to the personal safety of a user.

Chinese Patent Application CN205964755U discloses an automatic fire extinguishing apparatus for a battery box, including an inductor, an automatic controller, a fire extinguishing agent container, a transmission pipeline, and a pressure relief valve. When the inductor senses that the temperature in the battery box reaches a limit value, the automatic controller controls a fire extinguisher in the fire extinguishing agent container to enter the battery box through the transmission pipeline to extinguish open fire in the battery box and the dark fire of a battery core at the same time. Although the above apparatus may prevent the battery box from exploding, the apparatus may not treat thermal runaway flue gas, and a certain potential safety hazard exists.

Chinese Patent Application CN209730109U discloses an active heat flow dissociation apparatus for a battery, which includes a battery case for wrapping an inside battery core and a pumping mechanism for pumping heat flow. The inside of the battery case is sealed and an inner wall is provided with a high-temperature-resistant mica baffle, the battery case is externally connected to an exhaust pipe, one end of the exhaust pipe communicates with the inside of the battery case, while the other end thereof is connected to a pumping structure, the exhaust pipe is sequentially provided with a filter mechanism, a cooling mechanism, and a first explosion-proof valve from front to back, and the battery case is provided with a second explosion-proof valve. According to the apparatus, the thermal runaway battery is treated in an active pumping manner, the heat flow is filtered and cooled through the filter mechanism and the cooling mechanism, and the temperature and quality of the discharged gas are effectively controlled. However, the apparatus may not completely treat the thermal runaway flue gas, and the discharged thermal runaway flue gas still is provided with certain pollution to the environment.

Chinese Patent Application CN108417757A discloses a safety type lithium battery and a preparation method thereof. The lithium battery includes a cell and a safety explosion-proof apparatus. The safety explosion-proof apparatus is a material bag, a gas adsorbent is arranged inside the material bag, the gas adsorbent is activated carbon, a molecular sieve or a mixture of the activated carbon and the molecular sieve, and the mixture may directly adsorb high temperature substances sprayed from the battery. However, when adsorbing substances such as the activated carbon and the molecular sieve are used, the higher the temperature of the adsorbing substance, the worse the adsorption effect, for embodiment, the adsorption temperature of the activated carbon to the gaseous substance is below 50°C, and the temperature of the gas sprayed during the thermal runaway in the battery is generally higher than 300°C, and the activated carbon will lose the adsorption function on the gaseous substance at this temperature, but is provided with a desorption function on the adsorbed substance. At the same time, although the adsorbed substances at this temperature may absorb a gasified electrolyte and may not absorb the combustible gas such as hydrogen, carbon monoxide and methane generated by the thermal runaway in the battery, these combustible gas still have a risk of explosion.

It may be seen from the above description that, in the related art, the thermal runaway flue gas is mainly treated from three aspects. First, the thermal runaway is prevented from the perspective of fire extinguishing inside the battery; second, the thermal runaway flue gas is collected in a centralized manner, or the thermal runaway flue gas is isolated from air/oxygen by using an inert gas; and third, the combustible gas generated by the thermal runaway in the battery box is discharged out of the battery box. However, the above manners are not thorough enough to treat the thermal runaway flue gas, may not fundamentally solve the thermal runaway flue gas, the thermal runaway flue gas still easily causes explosion or secondary combustion, and a certain potential safety hazard exists. In addition, the discharged thermal runaway flue gas may also cause pollution to the environment.

### Summary

In order to solve the problem that existing treatment manners for thermal runaway flue gas in a battery are not thorough, have potential safety hazards, and pollute the environment, the present invention provides a thermal runaway flue gas treatment apparatus for battery, a treatment method, a battery group and a battery pack. In the present invention, the thermal runaway flue gas generated by the thermal runaway in the battery is mainly ignited and combusted to treat combustible components within the thermal runaway flue gas, so that the combusted gas may not be ignited again, thereby fundamentally achieving the purpose of safety, while avoiding environmental pollution.

In order to achieve the above problem, the technical solutions provided by the present invention are as follows.

The thermal runaway flue gas treatment apparatus for battery includes a flue gas ignition apparatus. The flue gas ignition apparatus is arranged at a flue gas outlet end of a lithium battery or a PACK box, and the flue gas ignition apparatus is configured to ignite the thermal runaway flue gas discharged by thermal runaway in the lithium battery or the PACK box.

In some embodiments, the flue gas ignition apparatus includes a pulse igniter.

In some embodiments, the thermal runaway flue gas treatment apparatus for battery further includes a trigger apparatus. The trigger apparatus triggers the flue gas ignition apparatus to ignite through the pressure of the thermal runaway flue gas discharged from the flue gas outlet end of the lithium battery or the PACK box.

In some embodiments, the flue gas ignition apparatus and the trigger apparatus are both arranged in a combustion chamber at an outer side of the flue gas outlet end of the lithium battery or the PACK box, the trigger apparatus is arranged opposite to the flue gas outlet end, the flue gas ignition apparatus is arranged above the trigger apparatus, the combustion chamber is an inner chamber of the combustion box, and the combustion box is fixedly connected to the lithium battery or the PACK box.

In some embodiments, the trigger apparatus includes a pressure plug. The pressure plug is arranged at the flue gas outlet end of the lithium battery or the PACK box.

In some embodiments, the trigger apparatus includes a longitudinal slide rod and a trigger block. The longitudinal slide rod and the trigger block are placed in the inner chamber of the combustion box, and the longitudinal slide rod is fixedly connected to the lithium battery or the PACK box. The trigger block is sleeved on an outer side of the longitudinal slide rod, and the trigger block is slidably connected to the longitudinal slide rod. The trigger block is arranged opposite to the flue gas outlet end of the lithium battery or the PACK box, and the flue gas ignition apparatus is arranged above the trigger block.

In some embodiments, a lower end surface of the trigger block is a concave arc-shaped surface, the arc-shaped surface is arranged opposite to the flue gas outlet end of the lithium battery or the PACK box, the trigger block is made of a fire insulation material, the bottom of the trigger block is provided with an arc groove, and the arc groove is arranged opposite to the flue gas outlet end of the lithium battery or the PACK box.

In some embodiments, the trigger apparatus further includes a limited block and an elastic reset piece. The limited block is fixedly connected to the top of the longitudinal slide rod, the limited block is connected to the trigger block through the elastic reset piece, and the limited block is fixedly connected to the flue gas ignition apparatus through a mounting rack.

In some embodiments, the bottom of the flue gas ignition apparatus is provided with a press switch, the press switch is arranged opposite to the trigger block, the top of the trigger block is provided with an ejector block, and the ejector block is arranged opposite to the press switch.

In some embodiments, the thermal runaway flue gas treatment apparatus for battery further includes a flame-retardant thermal insulation board. The combustion box and the longitudinal slide rod are fixedly connected to the lithium battery or the PACK box through the flame-retardant thermal insulation board, the flame-retardant thermal insulation board is provided with a communication hole, the combustion box communicates with the flue gas outlet end through the communication hole in the flame-retardant thermal insulation board, the flue gas outlet end is provided with a pressure relief assembly, and the pressure relief assembly penetrates through the flame-retardant thermal insulation board and extends into the combustion chamber of the combustion box. The top of the combustion box is open.

In some embodiments, the flue gas ignition apparatus includes an exhaust cylinder, and a plurality of exhaust nozzles, a pressure valve, a ignition switch, and a ignition apparatus. The plurality of exhaust nozzles are respectively fixedly connected to the exhaust cylinder to form an exhaust channel for the thermal runaway flue gas. The pressure valve and the ignition switch are arranged in the exhaust channel, the pressure valve includes a piston, and the pressure valve seals the exhaust channel at normal pressure, so that the exhaust channel keeping closed. The piston in the pressure valve is driven by the gas pressure to move, the exhaust channel is opened, while the pressure valve presses against the ignition switch to turn on the ignition apparatus. When the thermal runaway flue gas is generated in the battery, as the gas pressure gradually increases, the pistons in the plurality of pressure valves are sequentially pushed by gradually increaseing the gas pressure, the ignition switches are sequentially turned on, the ignition apparatuses are started, and the thermal runaway flue gas is ignited.

In some embodiments, an anti-backfire valve is further arranged in the exhaust cylinder, and the pressure valve is provided with a gasket.

In some embodiments, the exhaust cylinder and the exhaust nozzles are respectively fixedly arranged on a fixed cylinder to form a gas passage, so that the thermal runaway flue gas sequentially passes through the exhaust cylinder, the fixed cylinder, and the exhaust nozzles.

In some embodiments, the pressure valve is fixedly arranged in a joint of the fixed cylinder and the exhaust nozzle, the pressure valve is provided with a protrusion, the ignition switch is arranged in the exhaust nozzle, and when the piston of the pressure valve moves, the protrusion presses against the ignition switch, and the ignition apparatus is turned on.

In some embodiments, the flue gas ignition apparatus is a pulse igniter.

In some embodiments, the flue gas ignition apparatus includes a first exhaust pipe, a second exhaust pipe, a ignition apparatus, and a magnetic switch, the second exhaust pipe, the magnetic switch, and the ignition apparatus are all N in number, and N is an integer greater than or equal to 1. Inlets of the N second exhaust pipes are connected to an outlet of the first exhaust pipe. The N ignition apparatuses are arranged at outlets of the second exhaust pipes, and are configured to ignite the thermal runaway flue gas discharged by the second exhaust pipes. The N magnetic switches are arranged on the N second exhaust pipes in a one-to-one correspondence manner, and the N magnetic switches are configured to send electrical signals to the ignition apparatuses when the thermal runaway flue gas passes through the second exhaust pipes, so that the ignition apparatuses are turned on to ignite the thermal runaway flue gas.

In some embodiments, the magnetic switch ia one of mechanical magnetic switches, gravity magnetic switches and magnetic switches, and the magnetic switch is a normally closed switch.

In some embodiments, the thermal runaway flue gas treatment apparatus for battery further includes N exhaust nozzles. The exhaust nozzles are of a conical pipe structure, large ends of the N exhaust nozzles are connected to the outlets of the N second exhaust pipes in a one-to-one correspondence manner, and the N ignition apparatuses are arranged at outlets at small ends of the N exhaust nozzles in a one-to-one correspondence manner.

In some embodiments, the first exhaust pipe is provided with an anti-backfire valve, the anti-backfire valve is configured to prevent backflow of the thermal runaway flue gas, the anti-backfire valve is a one-way valve, the ignition apparatus is a pulse igniter, an ignition head of the pulse igniter is arranged on the second exhaust pipe through a support, a battery or alternating current interface of the pulse igniter is arranged in a power box, and a signal line of the pulse igniter is connected to the power box through a waterproof joint in a sealed manner.

In some embodiments, the flue gas ignition apparatus includes a combustion chamber, an ignition apparatus, and a trigger apparatus. The ignition apparatus is arranged in the combustion chamber, the combustion chamber is configured to store the thermal runaway gas generated by the thermal runaway in the battery, the trigger apparatus is connected to the ignition apparatus, and the trigger apparatus activates the ignition apparatus to ignite the thermal runaway gas based on the pressure and/or temperature of the gas.

In some embodiments, the trigger apparatus is a pressure switch and/or a temperature control switch or an electrical connector pressure gage.

In some embodiments, the thermal runaway flue gas treatment apparatus for battery further includes a thermal runaway flue gas exhaust pipe. The combustion chamber is connected to an electrolyte chamber of the battery through the thermal runaway flue gas exhaust pipe. An explosion venting apparatus is arranged in a pipe chamber of the thermal runaway flue gas exhaust pipe, when the trigger apparatus is the pressure switch and/or the temperature control switch, the pressure switch and/or the temperature control switch are/is arranged between the explosion venting apparatus and the combustion chamber, and the pressure switch and the temperature control switch are connected in parallel or in series. When the trigger apparatus is the electrical connector pressure gage, the electrical connector pressure gage is arranged between the electrolyte chamber of the battery and the combustion chamber, and a touch pressure of the electrical connector pressure gage is less than an explosion venting pressure of the explosion venting apparatus.

In some embodiments, the ignition apparatus includes an igniter and a power supply. The igniter is placed inside the combustion chamber, and the power supply is arranged inside or outside the combustion chamber. The power supply is electrically connected to the igniter and the trigger apparatus, and the trigger apparatus is electrically connected to the igniter.

In some embodiments, the thermal runaway flue gas treatment apparatus for battery futher includes an anti-backfire apparatus arranged between the thermal runaway flue gas exhaust pipe and the combustion chamber and a wind shield arranged at the top of the combustion chamber. A chamber wall of the combustion chamber is provided with an air inlet, the air inlet is configured to supplement combustion-supporting gas in the combustion chamber, the chamber wall of the combustion chamber is provided with a vent hole, and the vent hole is configured to discharge the remaining combusted gas.

In some embodiments, the flue gas ignition apparatus includes an igniter, a trigger apparatus and a flue gas pipeline. The trigger apparatus includes a control circuit board and a sensor. The sensor is arranged on the flue gas pipeline or a battery housing, an output end of the sensor is connected to the control circuit board, which outputs a signal to the control circuit board during the thermal runaway in the battery, and the control circuit board outputs an ignition current according to the signal. The igniter is an arc igniter or a resistance wire igniter, and the igniter is arranged on the flue gas pipeline, and may ignite the thermal runaway flue gas discharged from the flue gas pipeline under the ignition current output by the control circuit board.

In some embodiments, the igniter is a resistance wire igniter, and the resistance wire igniter includes an igniter housing and a resistance wire. An ignition chamber communicating with the flue gas pipeline is arranged in the igniter housing, the resistance wire is arranged in the ignition chamber, and both ends of the resistance wire are connected to the control circuit board outside the igniter housing.

In some embodiments, the igniter is an arc igniter, and the arc igniter includes an igniter housing, a first electrode wire, and a second electrode wire. An ignition chamber communicating with the flue gas pipeline is arranged in the igniter housing, one end of the first electrode wire and one end of the second electrode wire are arranged in the ignition chamber, an ionization gap is arranged between the two, and the other ends of the first electrode wire and the second electrode wire are arranged outside the igniter housing, and the other ends of the first electrode wire and the second electrode wire are connected to the control circuit board.

In some embodiments, each of the arc igniter and the resistance wire igniter further includes a ceramic chuck ring and a ceramic pressing ring. A ring groove is formed in the ceramic chuck ring, and the resistance wire, the first electrode wire or the second electrode wire is arranged in the ring groove, and is pressed by the ceramic pressing ring.

In some embodiments, the control circuit board is provided with an oscillating circuit, the oscillating circuit is configured to convert a direct current into an alternating current, and the igniter is an arc igniter, and a booster coil is arranged between the arc igniter and the control circuit board, and the booster coil is configured to boost and convey the alternating current output by the control circuit board to the first electrode wire and the second electrode wire.

In some embodiments, the trigger apparatus includes at least one of a pressure sensor, a gas sensor or a temperature sensor.

In some embodiments, the thermal runaway flue gas treatment apparatus for battery further includes a cooling adsorption unit. The cooling adsorption unit includes N cans which are sequentially connected in series. The N cans are filled with cooling materials and/or adsorption materials for cooling and/or adsorption of the thermal runaway flue gas in the battery, where N is an integer greater than or equal to 1. The flue gas ignition apparatus is arranged at an outlet end of the Nth can, and the flue gas ignition apparatus is configured to ignite the cooled and/or absorbed thermal runaway flue gas.

In some embodiments, the N cans are linearly arranged in a row, or linearly arranged in a U shape, or linearly arranged in a V shape or linearly arranged in an L shape, X porous plates are arranged in each can, the two adjacent porous plates and an inner wall of the can form a cooling adsorption chamber, part or all of the cooling adsorption chamber is filled with the cooling material and/or the adsorption material, where X is an integer greater than or equal to 2, and the adjacent porous plates are axially connected through a connecting rod.

In some embodiments, the adjacent cans are connected in series through an elbow pipe or a hose, a buffer return chamber for allowing the thermal runaway flue gas in the battery to pass is formed in the elbow pipe, the Nth can is further fixedly provided with an anti-backfire unit, a collection unit is further arranged between the Nth can and the flue gas ignition apparatus, and the flue gas ignition apparatus includes a pulse igniter. The flue gas ignition apparatus further includes an air inlet for introducing air and mixing and igniting with the thermal runaway flue gas.

In some embodiments, the thermal runaway flue gas treatment apparatus for battery further includes a gas storage cabin. A partition board is arranged in the gas storage cabin to separate the gas storage cabin into a first cabin and a second cabin that are closed. The first cabin includes an intake pipe to enable the thermal runaway flue gas to enter the first cabin. The second cabin includes an exhaust pipe to discharge the thermal runaway flue gas. The flue gas ignition apparatus includes an ignition apparatus, a trigger apparatus, and an ignition switch. The ignition apparatus is arranged at an outlet of the exhaust pipe. The partition board is provided with a pressure relief valve to enable the thermal runaway flue gas to enter the second cabin from the first cabin through the pressure relief valve. The trigger apparatus and the ignition switch are arranged on the gas storage cabin, the trigger apparatus penetrates through the partition board and may be pushed by the gas pressure, and the ignition switch is arranged in the second cabin and may be triggered and started by the trigger apparatus. When the gas pressure of the first cabin reaches a first threshold P₁. the thermal runaway flue gas enters the second cabin through the pressure relief valve, and reaches the outlet through the exhaust pipe. When the gas pressure of the first cabin reaches a second threshold P₂, the trigger apparatus presses against the ignition switch, the ignition switch starts the ignition apparatus to combust the thermal runaway flue gas, and a value of the first threshold P₁ is not less than a value of the second threshold P₂.

In some embodiments, the partition board is provided with a gasket to keep the first cabin and the second cabin airtight, the outlet of the exhaust pipe is provided with a check flow valve to control the flow of the thermal runaway flue gas, and the ignition apparatus is a pulse igniter.

In some embodiments, the exhaust pipe is provided with at least two exhaust nozzles, the ignition apparatus includes at least two ignition heads, and a support seat is arranged outside the gas storage cabin, and the support seat is configured to mount the ignition apparatus.

In some embodiments, the thermal runaway flue gas treatment apparatus for battery further includes a gas storage cabin. The gas storage cabin includes a gas inlet and an exhaust port to input and discharge the thermal runaway flue gas. The flue gas ignition apparatus is fixedly arranged at the exhaust port outside the gas storage cabin. The gas storage cabin is separated by a movable partition board into a first cabin and a second cabin that are independent from each other, the gas inlet is arranged in the first cabin, and the exhaust port is arranged in the second cabin. A switch assembly is further arranged in the second cabin, and the switch assembly includes an ignition switch. When the gas pressure in the first cabin increases, the movable partition board is pushed by the gas pressure in the first cabin and presses against the ignition switch to start the ignition apparatus, and the exhaust port is at least partially exposed to the first cabin to discharge the thermal runaway flue gas.

In some embodiments, the first cabin and/or the second cabin is/are provided with an elastic assembly, the elastic assembly abuts between the first cabin and/or the second cabin and the movable partition board, the movable partition board is provided with a gasket to keep the first cabin and the second cabin airtight, the exhaust port is provided as a pipeline, a check flow valve is fixed to the pipeline to control the flow of the thermal runaway flue gas, and the ignition apparatus is a pulse igniter.

In some embodiments, the gas storage cabin is a cylinder, the movable partition board includes a base and a protrusion, the protrusion may be inserted into the gas inlet to keep the gas inlet closed under normal pressure, and the base moves in an axial direction of the cylinder and a gap is formed between the base and the cylinder to allow the thermal runaway flue gas to pass through. The base is further provided with the switch assembly, when the thermal runaway flue gas passes through the gas inlet, due to the increase in pressure, the protrusion is jacked up, while the switch assembly is pressed to start the ignition apparatus to ignite the thermal runaway flue gas.

In some embodiments, the thermal runaway flue gas treatment apparatus for battery further includes an alarm assembly. The flue gas ignition apparatus includes an exhaust pipe, a trigger apparatus, and an ignition apparatus. The trigger apparatus is arranged on the exhaust pipe, and the trigger apparatus is configured to start the ignition apparatus when the thermal runaway flue gas passes through the exhaust pipe, the ignition apparatus is arranged at an outlet end of the exhaust pipe, and the ignition apparatus is configured to ignite the thermal runaway flue gas in the exhaust pipe. The alarm assembly is configured to send an alarm signal when the ignition apparatus is started.

In some embodiments, the alarm assembly is arranged on the flue gas ignition apparatus, and the alarm assembly includes a sound alarm apparatus and/or a light alarm apparatus. The sound alarm apparatus is a buzzer, the light alarm apparatus is a flashing light, and the flashing light is a red flashing light or a yellow flashing light.

In some embodiments, the exhaust pipe includes a first exhaust pipe and a second exhaust pipes. The number of the second exhaust pipes, the number of the trigger apparatuses, and the number of the ignition apparatuses are all N. Inlets of the N second exhaust pipes are connected to an outlet of the first exhaust pipe. The N ignition apparatuses are arranged at outlets of the second exhaust pipes. The N trigger apparatuses are arranged on the N second exhaust pipes in a one-to-one correspondence manner, N is an integer greater than or equal to 1, the first exhaust pipe or the second exhaust pipe is provided with a top cover, the top cover is hinged to the first exhaust pipe or the second exhaust pipe, and the top cover may be opened when the thermal runaway flue gas passes, or the first exhaust pipe or the second exhaust pipe is provided with a sealing plug, and the sealing plug is arranged at the outlet of the first exhaust pipe or the second exhaust pipe, and the sealing plug may be ejected when the thermal runaway flue gas passes.

The present invention further provides a battery group, including an explosion venting mechanism, a manifold, an ignition apparatus, and at least one single battery. The explosion venting mechanism is fixed to the single battery to release thermal runaway flue gas generated by thermal runaway in the single battery. The manifold is fixedly connected to the explosion venting mechanism to convey the thermal runaway flue gas. The ignition apparatus is fixedly connected to the manifold to ignite the thermal runaway flue gas conveyed by the manifold, and the ignition apparatus is one of the above treatment apparatuses for the thermal runaway flue gas in the battery.

In some embodiments, the battery group further includes a buffer apparatus. The buffer apparatus is arranged in front of the ignition apparatus, the buffer apparatus is provided with a pressure relief valve, the manifold is further fixedly provided with an anti-backfire apparatus, the buffer apparatus is an elastic bag or a pressure container, the ignition apparatus further includes an air inlet for introducing air and mixing and igniting with the thermal runaway flue gas.

The present invention further provides a battery pack, including a box body, an explosion venting mechanism, a manifold, an ignition apparatus, and a plurality of lithium ion battery placed in the box body. The explosion venting mechanism is fixed to the box body to release thermal runaway flue gas generated by thermal runaway in a lithium ion battery. The manifold is fixedly connected to the explosion venting mechanism to convey the thermal runaway flue gas. The ignition apparatus is fixedly connected to the manifold to ignite the thermal runaway flue gas conveyed by the manifold, and the ignition apparatus is one of the above treatment apparatuses for the thermal runaway flue gas in the battery.

In some embodiments, the manifold is further fixedly provided with an anti-backfire apparatus, and the lithium ion battery further includes a buffer apparatus arranged in front of the ignition apparatus. The buffer apparatus is further provided with a pressure relief valve.

In some embodiments, the ignition apparatus is a pulse igniter. The ignition apparatus further includes an air inlet for introducing air and mixing and igniting with the thermal runaway flue gas.

The present invention further provides a treatment method for thermal runaway flue gas in a battery, including the following step: performing ignition treatment on flue gas generated by thermal runaway in a battery before the flue gas is discharged into the atmosphere.

In some embodiments, ignition treatment is performed on the flue gas generated by the thermal runaway in the battery is ignited by one of the above treatment apparatuses for the thermal runaway flue gas in the battery before the flue gas is discharged into the atmosphere.

In some embodiments, the operation of performing ignition treatment on the flue gas generated by the thermal runaway in the battery before the flue gas is discharged into the atmosphere specifically includes: pushing a trigger apparatus to approach a flue gas ignition apparatus under the action of the pressure of the flue gas discharged from a lithium battery or a PACK box until the trigger apparatus triggers the flue gas ignition apparatus to ignite the flue gas.

In some embodiments, the treatment method for the thermal runaway flue gas in the battery specifically includes the following steps: pushing a pressure plug out of a flue gas outlet end under the action of the pressure of the flue gas discharged from the lithium battery or the PACK box, and enabling the pressure plug to approach a press switch on the flue gas ignition apparatus until the press switch is turned on by the pressure plug, so that the flue gas ignition apparatus ignites the flue gas. Or, the treatment method for the thermal runaway flue gas in the battery specifically includes the following steps: pushing a trigger block to approach the flue gas ignition apparatus under the action of the pressure of the flue gas discharged from the lithium battery or the PACK box until an ejector block on the trigger block triggers a press switch on the flue gas ignition apparatus to be turned on, so that the flue gas ignition apparatus ignites the flue gas; and when the pressure of the flue gas discharged from the flue gas outlet end becomes small, enabling the trigger block to restore to an initial state under the action of an elastic reset piece.

Compared with the related art, the present invention is provided with the following beneficial effects.
1. In the present invention, the flue gas outlet end of the lithium battery or the PACK box is provided with the flue gas ignition apparatus, the flue gas discharged from the lithium battery or the PACK box is combusted through the flue gas ignition apparatus, the combustible gas in the thermal runaway flue gas is combusted and then discharged into the atmosphere, thereby effectively avoiding the possibility of explosion or secondary combustion, while preventing pollution of the thermal runaway flue gas to the environment.
2. In the present invention, the flue gas ignition apparatus is arranged at the outer side of the flue gas outlet end of the lithium battery or the PACK box, which facilitates ignition of the thermal runaway flue gas discharged from the lithium battery or the PACK box, and achieves ordered treatment of the thermal runaway flue gas, thereby controlling the content of the combustible components in the thermal runaway flue gas, and preventing explosion. The flue gas ignition apparatus is arranged in the combustion chamber, the flue gas discharged from the flue gas outlet end is collected through the combustion chamber, and the combustion chamber may collect the flue gas in a centralized manner and then ignite. The trigger apparatus is arranged opposite to the flue gas outlet end, the trigger apparatus is pushed by the gas pressure of the flue gas discharged from the flue gas outlet end to approach the flue gas ignition apparatus, so as to trigger the switch of the flue gas ignition apparatus to promote the flue gas ignition apparatus to combust the combustible components in the flue gas, and the combusted gas is discharged into the atmosphere to avoid the pollution of the combustible gas to the atmosphere. At the same time, dangerous events such as explosion and fire caused by the accumulation of the combustible gas in the lithium battery or the PACK box are also avoided.
3. The trigger apparatus in the present disclosure includes the pressure plug. The pressure plug is ejected from the flue gas outlet end under the action of the instantaneous pressure of the flue gas and approaches the flue gas ignition apparatus, thereby triggering the flue gas ignition apparatus to ignite the flue gas. The pressure plug may be opened as long as the pressure of the flue gas reaches a limit pressure value, and the operation is easy to control.
4. The trigger apparatus in the present invention includes the longitudinal slide rod and the trigger block. The gas pressure of the flue gas discharged from the flue gas outlet end pushes the trigger block to slide in the axial direction of the longitudinal slide rod to approach the switch of the flue gas ignition apparatus and trigger the switch of the flue gas ignition apparatus, so that the flue gas ignition apparatus ignites the flue gas. The trigger apparatus further includes the limited block and the elastic reset piece. The elastic reset piece is fixedly connected to the top of the longitudinal slide rod, and the trigger block is prevented from being separated from the longitudinal slide rod through a limiting piece when the gas pressure is too large. The limited block is connected to the trigger block through the elastic reset piece, and the elastic reset piece may be restored to the original state after the trigger block triggers the switch of the flue gas ignition apparatus.
5. The lower end surface of the trigger block in the present invention is the concave arc-shaped surface, which increases the stress area of the trigger block. The bottom of the trigger block is provided with the arc groove, and the arc groove is directly opposite to the flue gas outlet end. The arc groove may accumulate the gas pressure to enhance the pushing effect of the gas pressure.
6. The limited block in the present invention is fixedly connected to the flue gas ignition apparatus through the mounting rack, and the position of the flue gas ignition apparatus is fixed through the mounting rack to prevent the flue gas ignition apparatus from affecting the trigger effect due to shaking when the trigger block triggers the switch of the flue gas ignition apparatus. The mounting rack is fixedly connected to the flue gas ignition apparatus through a hoop, and the fixed connection between the mounting rack and the flue gas ignition apparatus may be facilitated through the hoop.
7. In the present invention, the top of the trigger block is provided with the ejector block, and the ejector block is arranged opposite to the press switch. Through the ejector block, the operation may be better triggered, and the switch of the flue gas ignition apparatus may be more conveniently triggered.
8. The combustion box and the longitudinal slide rod in the present invention are fixedly connected to the lithium battery or the PACK box through the flame-retardant thermal insulation board, and fire and thermal insulation is performed on the lithium battery or the PACK box and the trigger apparatus of the flue gas ignition apparatus through the flame-retardant thermal insulation board, so as to prevent the heat generated by combustion from affecting an energy storage battery normally working in the lithium battery or the PACK box.
9. In the present invention, the battery is provided with the thermal runaway flue gas treatment apparatus for battery, the flue gas generated by the thermal runaway in the battery is released through the exhaust cylinder and the plurality of exhaust nozzles, the plurality of pressure valves and ignition switches are arranged in the gas passages formed by the exhaust cylinder and the exhaust nozzles, and when the gas pressure of the thermal runaway flue gas reaches the threshold, the thermal runaway flue gas sequentially passes through the exhaust nozzles and the ignition apparatuses are sequentially turned on by the pressure valves through pressing against the ignition switches to ignite the thermal runaway flue gas. The apparatus is simple and small in structure, and the flue gas generated by the thermal runaway in the battery is treated through the apparatus, which is safe, environmentally friendly, economical, practical, and high in efficiency.
10. The thermal runaway flue gas treatment apparatus for battery in the present invention may ignite the flue gas generated by the thermal runaway, so as to avoid the pollution of the discharged thermal runaway flue gas to the atmosphere. At the same time, the dangerous events such as explosion and fire caused by the accumulation of the thermal runaway gas in the battery are also avoided, so that the safety of the battery is greatly improved. According to the thermal runaway flue gas treatment apparatus for battery, the ignition apparatus is started through the magnetic switch, the magnetic switch outputs the signal through the permanent magnet and the inductor, and then the ignition apparatus is triggered. The magnetic switch is provided with relatively high sensitivity, may achieve induction and triggering as long as the thermal runaway flue gas passes through the second exhaust pipe, and does not need a relatively high induction pressure. The ignition apparatus may be triggered in the early or initial stage of passing of the thermal runaway flue gas, and the ignition apparatus may ignite the early or initial thermal runaway flue gas, so as to avoid environmental pollution or safety accidents caused by leakage of the early or initial thermal runaway flue gas through the second exhaust pipe, so that the safety of the battery is improved to a certain extent.
11. The thermal runaway flue gas treatment apparatus for battery in the present invention includes the combustion chamber, the ignition apparatus and the trigger apparatus. The combustion chamber is configured to store the thermal runaway flue gas and the combustion-supporting gas generated by the thermal runaway in the battery, the trigger apparatus is configured to trigger the ignition apparatus to ignite the thermal runaway flue gas according to the pressure and/or the temperature of the thermal runaway flue gas, and the thermal runaway flue gas in the combustion chamber is combusted through the ignition apparatus, so that the concentration of the combustible components in the thermal runaway flue gas is reduced or the concentration of the combustible components in the thermal runaway flue gas is zero, so as to ensure that the combusted gas does not cause secondary combustion, thereby fundamentally achieving the purpose of fire resistance, avoiding the accumulation of the thermal runaway flue gas inside the battery, preventing the explosion of the battery, and ensuring the safety of battery operation.
12. The thermal runaway flue gas treatment apparatus for battery in the present invention includes the thermal runaway flue gas exhaust pipe. The explosion venting apparatus is arranged in the thermal runaway flue gas exhaust pipe, and when the thermal runaway inside the battery generates high temperature and high pressure, the explosion venting apparatus is opened through the high temperature and/or the high pressure, and the combustible gas generated by the thermal runaway in the battery is guided into the combustion chamber for combustion through the thermal runaway flue gas exhaust pipe.
13. The igniter of the thermal runaway flue gas treatment apparatus for battery in the present invention is the arc igniter or the resistance wire igniter, and the arc igniter or the resistance wire igniter is a continuous ignition apparatus, which avoids wind or rain in the external environment from affecting the performance of the igniter, thereby avoiding the risk that the thermal runaway flue gas may not be ignited timely.
14. In the thermal runaway flue gas treatment apparatus for battery provided in the present invention, the thermal runaway flue gas in the battery may reduce the temperature and flow of the flue gas through the cooling adsorption chamber, and improve the purification effect. At the same time, after cooling and adsorption treatment is performed on the thermal runaway flue gas in the battery at a front end, the service life of the ignition apparatus at a rear end is prolonged.
15. In the thermal runaway flue gas treatment apparatus for battery provided in the present invention, the N cans may be arranged according to the requirements of a mounting space, and may be arranged in various forms such as a row, a U shape, a V shape or an L shape to meet various mounting requirements, and save space, and the N cans may be assembled through the elbow pipe so as to be conveniently mounted and dismounted for most of existing single batteries and assembled batteries, with no need to change the structure of the existing battery, relatively low processing cost, and wide application range.
16. In the thermal runaway flue gas treatment apparatus for battery provided in the present invention, the collection unit may collect the combustible components in the flue gas, and ignite at the outlet end after the gas amount reaches the threshold. If the gas amount does not reach the threshold, the flue gas ignition apparatus is not started, which increases the collection unit as a line of defense in front of the flue gas ignition apparatus and improves the safety.
17. The thermal runaway flue gas treatment apparatus for battery in the present invention is provided with the gas storage cabin and the partition board, the partition board separates the gas storage cabin into the first cabin and the second cabin that are closed, and the exhaust port and the ignition apparatus are arranged in the second cabin. When the gas pressure in the first cabin increases, the movable trigger apparatus on the partition board presses against the ignition switch to start the ignition apparatus, and the gas in the first cabin is ignited after being discharged through the pressure relief valve on the partition board. The flue gas generated by the thermal runaway in the battery is treated by the apparatus, which is safe, environmentally friendly, economical, practical and high in efficiency, and the apparatus is simple in structure, convenient to assemble and low in cost.
18. In the present invention, the battery housing is provided with the thermal runaway flue gas treatment apparatus for battery, the thermal runaway flue gas generated by the thermal runaway in the battery is released into the gas storage cabin, the gas pressure of the first cabin drives the movable partition board to touch the ignition switch in the second cabin, the exhaust port is exposed to the first cabin, and the thermal runaway flue gas with a certain concentration is ignited after being discharged through the exhaust port. The apparatus is simple and small in structure, and the flue gas generated by the thermal runaway in the battery is treated by the apparatus, which is safe, environmentally friendly, economical, practical and high in efficiency.
19. The thermal runaway flue gas treatment apparatus for battery in the present invention includes the flue gas ignition apparatus and the alarm assembly. The flue gas ignition apparatus may ignite the flue gas generated by the thermal runaway, so as to avoid the pollution of the discharged thermal runaway flue gas to the atmosphere. At the same time, the dangerous events such as explosion and fire caused by the accumulation of the thermal runaway gas in the battery are also avoided, so that the safety of the battery is greatly improved. At the same time, the thermal runaway flue gas treatment apparatus for battery is provided with the alarm assembly. The alarm assembly may send the alarm signal when the ignition apparatus is started, so as to achieve a warning effect, so that a worker may timely treat the thermal runaway battery, and the alarm assembly may accurately locate the location of the thermal runaway battery, so that the worker may perform accurate and timely treatment.
20. In the present invention, the battery group and the battery pack are respectively provided with the explosion venting mechanism and the manifold on the battery, the thermal runaway gas generated by the thermal runaway in the battery is directionally released and discharged by the manifold, and then the ignition apparatus is arranged. The manner of performing combustion treatment on the thermal runaway flue gas solves the risk of fire caused by the fact that the thermal runaway flue gas generated by the thermal runaway in the battery is discharged nowhere, and is simple in structure, safe, environmentally friendly, and high in efficiency compared with the related art.

### Brief Description of the Drawings

Fig. 1 is a schematic structural diagram of a thermal runaway flue gas treatment apparatus for battery in Embodiment 1 of the present invention.
Fig. 2 is a schematic diagram of a connection between a trigger apparatus and a lithium battery or a PACK box in Embodiment 1 of the present invention.
Fig. 3 is a first schematic structural diagram of a trigger apparatus in Embodiment 3 of the present invention.
Fig. 4 is a local enlarged diagram of a part A in Fig. 3.
Fig. 5 is a second schematic structural diagram of a trigger apparatus in Embodiment 3 of the present invention.
Fig. 6 is a first schematic structural diagram of a thermal runaway flue gas treatment apparatus for battery in Embodiment 8 of the present invention.
Fig. 7 is a second schematic structural diagram of a thermal runaway flue gas treatment apparatus for battery in Embodiment 8 of the present invention.
Fig. 8 is a third schematic structural diagram of a thermal runaway flue gas treatment apparatus for battery in Embodiment 8 of the present invention.
Fig. 9 is a schematic structural diagram of a battery housing in Embodiment 9 of the present invention.
Fig. 10 is a schematic structural diagram of a section of a battery housing in Embodiment 9 of the present invention.
Fig. 11 is a schematic structural diagram of a thermal runaway flue gas treatment apparatus for battery in Embodiment 10 of the present invention.
Fig. 12 is a first schematic structural diagram of a magnetic switch in Embodiment 10 of the present invention.
Fig. 13 is a second schematic structural diagram of a magnetic switch in Embodiment 10 of the present invention.
Fig. 14 is a schematic structural diagram of a flue gas apparatus in Embodiment 12 of the present invention.
Fig. 15 is a schematic structural diagram of a flue gas apparatus in Embodiment 13 of the present invention.
Fig. 16 is a schematic structural diagram of a flue gas apparatus in Embodiment 14 of the present invention.
Fig. 17 is a schematic structural diagram of a flue gas apparatus in Embodiment 15 of the present invention.
Fig. 18 is a first schematic structural diagram of a thermal runaway flue gas treatment apparatus for battery in Embodiment 16 of the present invention.
Fig. 19 is a section view of an arc igniter in Embodiment 16 of the present invention.
Fig. 20 is a top view of an arc igniter in Embodiment 16 of the present invention.
Fig. 21 is a second schematic structural diagram of a thermal runaway flue gas treatment apparatus for battery in Embodiment 16 of the present invention.
Fig. 22 is a section view of a resistance wire igniter in Embodiment 16 of the present invention.
Fig. 23 is a top view of a resistance wire igniter in Embodiment 16 of the present invention.
Fig. 24 is a schematic structural diagram of a flue gas pipeline in Embodiment 16 of the present invention.
Fig. 25 is a first schematic structural diagram of a battery group in Embodiment 16 of the present invention.
Fig. 26 is a second schematic structural diagram of a battery group in Embodiment 16 of the present invention.
Fig. 27 is a first schematic structural diagram of a thermal runaway flue gas treatment apparatus for battery in Embodiment 17 of the present invention.
Fig. 28 is a second schematic structural diagram of a thermal runaway flue gas treatment apparatus for battery in Embodiment 17 of the present invention.
Fig. 29 is a third schematic structural diagram of a thermal runaway flue gas treatment apparatus for battery in Embodiment 17 of the present invention.
Fig. 30 is a fourth schematic structural diagram of a thermal runaway flue gas treatment apparatus for battery in Embodiment 17 of the present invention.
Fig. 31 is a schematic structural diagram of a thermal runaway flue gas treatment apparatus for battery in Embodiment 18 of the present invention.
Fig. 32 is a schematic structural diagram of a thermal runaway flue gas treatment apparatus for battery in Embodiment 18 of the present invention.
Fig. 33 is a schematic structural diagram of a battery housing in Embodiment 19 of the present invention.
Fig. 34 is a first schematic structural diagram of a thermal runaway flue gas treatment apparatus for battery in Embodiment 20 of the present invention.
Fig. 35 is a second schematic structural diagram of a thermal runaway flue gas treatment apparatus for battery in Embodiment 20 of the present invention.
Fig. 36 is a schematic structural diagram of a battery housing in Embodiment 21 of the present invention.
Fig. 37 is a first schematic structural diagram of a thermal runaway flue gas treatment apparatus for battery in Embodiment 22 of the present invention.
Fig. 38 is a second schematic structural diagram of a thermal runaway flue gas treatment apparatus for battery in Embodiment 22 of the present invention.
Fig. 39 is a third schematic structural diagram of a thermal runaway flue gas treatment apparatus for battery in Embodiment 22 of the present invention.
Fig. 40 is a schematic structural diagram of a battery housing in Embodiment 22 of the present invention.
Fig. 41 is a first schematic structural diagram of a thermal runaway flue gas treatment apparatus for battery in Embodiment 23 of the present invention.
Fig. 42 is a second schematic structural diagram of a thermal runaway flue gas treatment apparatus for battery in Embodiment 23 of the present invention.
Fig. 43 is a third schematic structural diagram of a thermal runaway flue gas treatment apparatus for battery in Embodiment 23 of the present invention three.
Fig. 44 is a schematic diagram of a lithium ion battery group in Embodiment 24 of the present invention.
Fig. 45 is a schematic diagram of a pulse igniter of a lithium ion battery group in Embodiment 24 of the present invention.
Fig. 46 is a schematic diagram of a lithium ion battery group in Embodiment 25 of the present invention.
Fig. 47 is a schematic diagram of a lithium ion battery group in Embodiment 26 of the present invention.
Fig. 48 is a schematic diagram of a battery pack in Embodiment 27 of the present invention.
Fig. 49 is a schematic diagram of a battery pack in Embodiment 28 of the present invention.
Fig. 50 is a schematic diagram of a battery pack in Embodiment 29 of the present invention.

Reference signs: 11-lithium battery or PACK box, 12-pressure relief valve, 13-combustion box, 131-flame-retardant thermal insulation board, 14-longitudinal slide rod, 15-flue gas ignition apparatus, 151-press switch, 16-trigger block, 161-lower end surface, 162-arc groove, 163-through hole, 164-ejector block, 17-limited block, 18-mounting rack, 181-hoop, 19-reset spring; 21-battery housing, 211-explosion venting opening, 24-thermal runaway flue gas treatment apparatus for battery, 241-exhaust cylinder, 242-exhaust nozzle, 243-ignition switch, 244-ignition apparatus, 245-pressure valve, 2451-gasket, 2452-protrusion, 246-anti-backfire valve, 247-fixed cylinder, 248-mounting part, 249-support seat; 31-first exhaust pipe, 32-second exhaust pipe, 33-ignition apparatus, 34-magnetic switch, 35-exhaust nozzle, 36-anti-backfire valve, 37-support, 38-power box, 39-waterproof joint, 331-ignition head, 332-signal line, 341-inductor, 342-magnetic valve core; 41-thermal runaway flue gas exhaust pipe, 42-combustion chamber, 43-pulse igniter, 44-power supply, 45-air inlet, 46-wind shield, 47-vent hole, 48-anti-backfire apparatus, 49-pressure switch, 410-explosion venting apparatus, 411-explosion venting film, 412-temperature control switch, 51-igniter, 52-trigger apparatus, 53-flue gas pipeline, 54-tee pipe, 55-battery, 56-explosion venting opening or explosion venting pipe, 57-manifold, 511-arc igniter, 512-resistance wire igniter, 5111-igniter housing, 5112-first electrode wire, 5113-second electrode wire, 5114-ignition chamber, 5115-ionization gap, 5116-ceramic chuck ring, 5117-ceramic pressing ring, 5118-booster coil, 5121-resistance wire, 521-control circuit board, 522-sensor, 531-flue gas main pipe, 532-flue gas branch pipe, 61-cooling adsorption unit, 62-flue gas ignition apparatus, 63-can, 64-elbow pipe, 65-collection unit, 71-gas storage cabin, 72-ignition apparatus, 75-check flow valve, 77-partition board, 78-pressure relief valve, 79-support part, 713-mounting part, 711-gas inlet, 712-exhaust port, 721-ignition switch, 722-trigger apparatus, 731-first cabin, 732-second cabin, 81-gas storage cabin, 82-ignition apparatus, 84-elastic assembly, 85-check flow valve, 86-mounting part, 87-movable partition board, 88-support seat, 811-gas inlet, 812-exhaust port, 821-ignition switch, 831-first cabin, 832-second cabin, 871-stabilization seat, 8121-pipeline, 8122-exhaust nozzle, 810-thermal runaway flue gas treatment apparatus for battery, 8211-mounting seat, 822-trigger block, 871-protrusion, 872-base, 91-exhaust pipe, 92-trigger apparatus, 93-ignition apparatus, 94-alarm assembly, 95-top cover, 96-anti-backfire apparatus, 97-ignition head, 98-support, 99-power box, 910-circuit board, 911-first exhaust pipe, 912-second exhaust pipe, 1-single battery, 2-explosion-venting mechanism, 3-manifold, 4-ignition apparatus, 5-anti-backfire apparatus, 6-buffer apparatus, 7-box body, 8-igniter, 9-air inlet, and 10-pressure relief valve.

### Detailed Description of the Embodiments

The technical solutions of the present invention are further explained below in conjunction with the accompanying drawings and embodiments, but the present invention is not limited to the implementations described below.

The present invention mainly provides a thermal runaway flue gas treatment apparatus for battery, a treatment method, a battery group, and a battery pack. The thermal runaway flue gas treatment apparatus for battery includes a flue gas ignition apparatus. The structure of the flue gas ignition apparatus is not required in the present invention, as long as the thermal runaway flue gas generated by thermal runaway in the battery may be ignited, so that the combusted gas may not be ignited again. The flue gas ignition apparatus of various structures provided in the present invention is described and exemplified below in detail.

### Embodiment 1

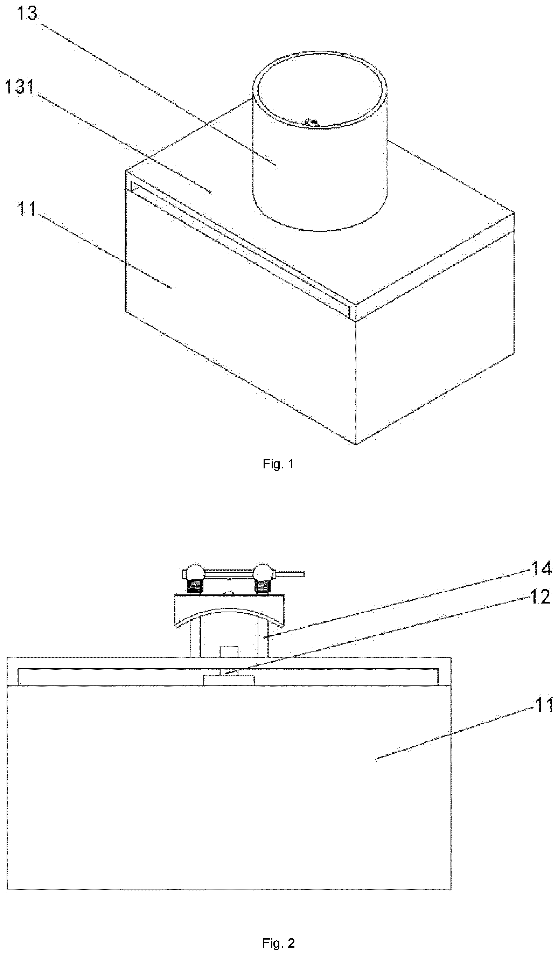

As shown in Figs. 1-4, a thermal runaway flue gas treatment apparatus for battery provided in the embodiment is arranged at a flue gas outlet end of a lithium battery or a PACK box 11, and includes a flue gas ignition apparatus 15. The flue gas ignition apparatus 15 ignites the flue gas discharged by thermal runaway in the lithium battery or the PACK box 11. The lithium battery is a single battery, and the PACK box is a large-capacity battery formed by connecting a plurality of lithium batteries in series and parallel. The flue gas ignition apparatus 15 of the embodiment may be a piezoelectric igniter or a pulse igniter. In some embodiments, the flue gas ignition apparatus 15 is the pulse igniter.

The thermal runaway flue gas treatment apparatus for battery of the embodiment further includes a trigger apparatus. The trigger apparatus triggers the flue gas ignition apparatus 15 to ignite through the pressure of the flue gas discharged from the flue gas outlet end of the lithium battery or the PACK box 11. The flue gas ignition apparatus 15 and the trigger apparatus are both arranged in a combustion chamber at an outer side of the flue gas outlet end of the lithium battery or the PACK box 11, the trigger apparatus is arranged opposite to the flue gas outlet end, and the flue gas ignition apparatus 15 is arranged above the trigger apparatus.

The combustion chamber of the embodiment is an inner chamber of a combustion box 13, an inner chamber of a combustion bag, or an inner chamber formed by other containers. In some embodiments, the combustion chamber is the inner chamber of the combustion box 13, and the combustion box 13 is fixedly connected to a top end surface of the lithium battery or the PACK box 11. In some embodiments, the combustion box 13 is made of a metal material or a high-temperature-resistant plastic material.

The flue gas outlet end of the embodiment is provided with a pressure relief assembly, and the pressure relief assembly penetrates through a flame-retardant thermal insulation board 131 and extends into the combustion chamber of the combustion box 13. The pressure relief assembly may be a pressure relief valve 12 or an explosion venting film. In some embodiments, the pressure relief assembly of the embodiment is the pressure relief valve 12. The combustion box 13 is of a tubular structure with openings at the top and bottom, which may be a cylindrical structure, a columnar structure, a conical barrel shaped structure or a tubular structure of other shapes. In some embodiments, the combustion box 13 of the embodiment is of a cylindrical structure, and the top opening may timely discharge the combusted gas to prevent the risk of explosion caused by the excessive pressure due to gas accumulation in the combustion box 13.

### Embodiment 2

On the basis of Embodiment 1, the trigger apparatus in the thermal runaway flue gas treatment apparatus for battery of the embodiment is a pressure plug, the pressure plug is pressed on the flue gas outlet end of the lithium battery or the PACK box 11 to seal the inner chamber of the lithium battery or the PACK box 11, when the flue gas is discharged from the inner chamber of the lithium battery or the PACK box 11, the pressure plug may be pushed out by the gas pressure of the flue gas, and the ejected pressure plug is configured to trigger the flue gas ignition apparatus 15 to ignite the flue gas.

### Embodiment 3

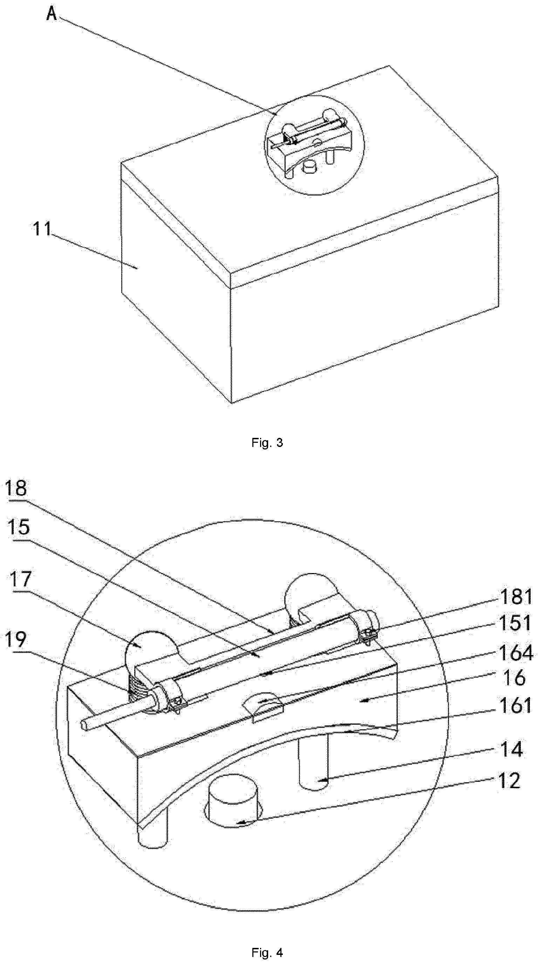

As shown in Figs. 3-5, on the basis of Embodiment 1, the trigger apparatus in the thermal runaway flue gas treatment apparatus for battery of the embodiment includes a longitudinal slide rod 14 and a trigger block 16. The longitudinal slide rod 14 and the trigger block 16 are placed in the combustion chamber of the combustion chamber 13, and a bottom end of the longitudinal slide rod 14 is fixedly connected to the top end surface of the lithium battery or the PACK box 11. The trigger block 16 is sleeved on an outer side of the longitudinal slide rod 14, and is slidably connected to the longitudinal slide rod 14. The trigger block 16 is provided with a through hole 163 penetrating up and down, the longitudinal slide rod 14 passes through the through hole 163 and is sleeved on the outer side of the longitudinal slide rod 14 and is slidably connected to the longitudinal slide rod 14, that is, the trigger block 16 may slide in an axial direction of the longitudinal slide rod 14. The trigger block 16 is arranged opposite to the flue gas outlet end, and the flue gas ignition apparatus 15 is arranged above the trigger block 16. In some embodiments, two longitudinal slide rods 14 are provided in the embodiment, and are respectively arranged on both sides above the flue gas outlet end, and the two longitudinal slide rods 14 may improve the sliding stability of the trigger block 16.

The bottom of the flue gas ignition apparatus 15 of the embodiment is provided with a press switch 151, and the press switch 151 is arranged opposite to the trigger block 16. The trigger block 16 triggers the press switch to be turned on, so that the flue gas ignition apparatus 15 is ignited. In some embodiments, the flue gas ignition apparatus 15 of the embodiment is a pulse igniter.

The trigger apparatus in the embodiment further includes a limited block 17 and an elastic reset piece. The limited block 17 is fixedly connected to the top of the longitudinal slide rod 14, a bottom end surface of the limited block 17 is fixedly connected to one end of the elastic reset piece, the other end of the elastic reset piece is fixedly connected to the trigger block 16, and the limited block 17 is fixedly connected to the flue gas ignition apparatus. In some embodiments, the elastic reset piece is a reset spring 19 or an elastic cushion block, and the elastic cushion block may be made of a rubber or plastic material. In some embodiments, the elastic reset piece of the embodiment is a reset spring 19.

In some embodiments, a bottom end surface of the press switch 151 of the embodiment is located below the bottom end surface of the limited block 17, which facilitates the contact of the trigger block 16 with the press switch 151 and improves the trigger efficiency. In some embodiments, the trigger block 16 of the embodiment is made of a flame-retardant material (fire insulation material). In some embodiments, the trigger block 16 of the embodiment is of a hollow structure, which may reduce the weight of the trigger block 16, so that the trigger block 16 is more easily pushed. In some embodiments, a lower end surface 161 of the trigger block 16 of the embodiment is an arc-shaped surface with a concave central part, and the arc-shaped surface is arranged opposite to the flue gas outlet end. In some embodiments, in the embodiment, the bottom of the trigger block 16 is provided with an arc groove 162 with a rectangular cross section, and the arc groove 162 is arranged opposite to the flue gas outlet end. In some embodiments, the trigger block 16 of the embodiment is made of a fire insulation material to prevent the flame from flowing back into the lithium battery or the PACK box 11.

### Embodiment 4

As shown in Fig. 4, on the basis of Embodiment 3, in the thermal runaway flue gas treatment apparatus for battery of the embodiment, a mounting rack 18 is fixedly mounted on the limited block 17, and both ends, corresponding to the flue gas ignition apparatus 15, of the mounting rack 18 are respectively provided with a hoop 181. The flue gas ignition apparatus 15 is fixed by the hoops 181 to prevent the flue gas ignition apparatus 15 from shaking in the trigger process of the press switch 151 of the flue gas ignition apparatus 15.

### Embodiment 5

As shown in Fig. 1 and Fig. 4, on the basis of Embodiment 4, in the thermal runaway flue gas treatment apparatus for battery of the embodiment, the top of the trigger block 16 is integrally and fixedly provided with an ejector block 164, and the ejector block 164 is arranged opposite to the press switch 151. At the same time, the thermal runaway flue gas treatment apparatus for battery further includes a flame-retardant thermal insulation board 131. The flame-retardant thermal insulation board 131 is fixedly connected to the top end surface of the lithium battery or the PACK box 11, the combustion box 13 and the longitudinal slide rod 14 are fixedly connected to the lithium battery or the PACK box 11 through the flame-retardant thermal insulation board 131, a bottom end surface of the combustion box 13 is fixedly connected to a top end surface of the flame-retardant thermal insulation board 131, a top end surface of the longitudinal slide rod 14 is fixedly connected to the top end surface of the flame-retardant thermal insulation board 131, the flame-retardant thermal insulation board 131 is provided with a communication hole, and the combustion box 13 communicates with the flue gas outlet end through the communication hole in the flame-retardant thermal insulation board 131. Fire and thermal insulation is performed between the lithium battery or the PACK box 11 and the trigger apparatus of the flue gas ignition apparatus through the flame-retardant thermal insulation board 131. The flue gas outlet end is provided with the pressure relief assembly, and the pressure relief assembly penetrates through the flame-retardant thermal insulation board 131 and extends into the combustion chamber of the combustion box 13. The top of the combustion box 13 is open. In some embodiments, the flame-retardant thermal insulation board 131 of the embodiment is a rubber-plastic board, a foamed fireproof board, or a fireproof rock wool board.

### Embodiment 6

The embodiment provides a treatment method for thermal runaway flue gas in a battery, including the following step: performing ignition treatment on flue gas generated by thermal runaway in a battery before the flue gas is discharged into the atmosphere.

According to the method of the present invention, the risk of explosion and fire in a lithium battery or a PACK box 11 caused by accumulation of combustible gas in the lithium battery or the PACK box 11 may be well prevented. At the same time, the combustible gas in the flue gas in a combustion box 13 is combusted and then discharged into the atmosphere to prevent pollution to the atmosphere.

### Embodiment 7

The embodiment provides a treatment method for thermal runaway flue gas in a battery, including the following step: performing ignition treatment on flue gas generated by thermal runaway in a battery before the flue gas is discharged into the atmosphere. According to the treatment method for the thermal runaway flue gas in the battery, a trigger apparatus is pushed to approach a flue gas ignition apparatus 15 under the action of the pressure of the flue gas discharged from a lithium battery or a PACK box 11 until the trigger apparatus triggers the flue gas ignition apparatus 15 to ignite the flue gas, and the combusted flue gas is discharged to the atmosphere. The treatment method for the thermal runaway flue gas in the battery specifically includes the following steps that: when a large amount of combustible gas accumulates in the lithium battery or the PACK box 11 and the gas pressure reaches a limit, the flue gas may be discharged from the lithium battery or the PACK box 11, a pressure plug is pushed out of a flue gas outlet end under the action of the instantaneous pressure of the discharged flue gas, and the pressure plug approaches a press switch 151 on the flue gas ignition apparatus 15 until the pressure plug collides with the press switch 151 to turn on the press switch 151, so that the flue gas ignition apparatus 15 ignites the flue gas. After the flue gas is ignited, the combusted gas is discharged from the top of a combustion box 13. Or, the treatment method for the thermal runaway flue gas in the battery specifically includes the following steps that: 1) when a large amount of combustible gas accumulates in the lithium battery or the PACK box 11 and the gas pressure reaches a limit, a pressure relief valve 12 or an explosion venting film at the flue gas outlet end is opened, the flue gas is discharged along the flue gas outlet end, a trigger block 16 is pushed to approach the flue gas ignition apparatus 15 by using the instantaneous pressure of the flue gas discharged from the flue gas outlet end until an ejector block 164 on a trigger block 16 collides with the press switch 151 on the flue gas ignition apparatus 15, and the press switch 151 is triggered to act, so that the flue gas ignition apparatus 15 ignites the flue gas, and the combusted gas is discharged from the top of the combustion box 13 after the flue gas is ignited; and 2) when the instantaneous pressure of the flue gas is released, and the pressure of the flue gas discharged from the flue gas outlet end becomes small, the trigger block 16 restores to the initial state under the action of an elastic reset piece.

### Embodiment 8

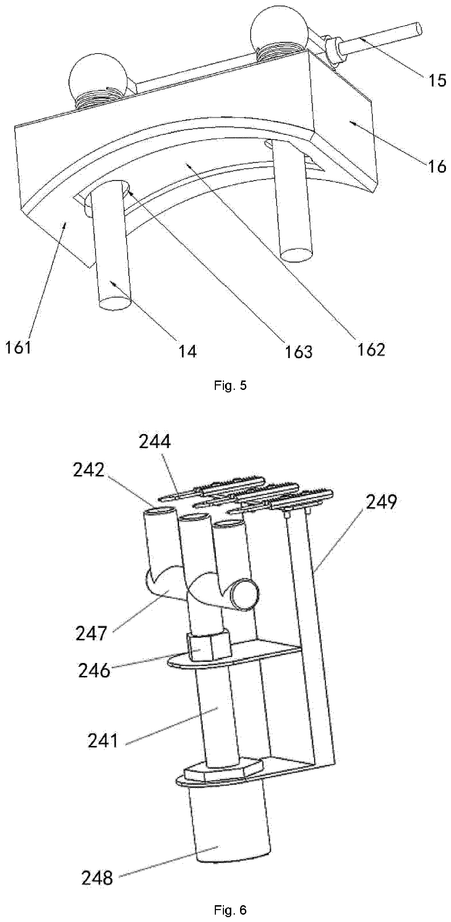

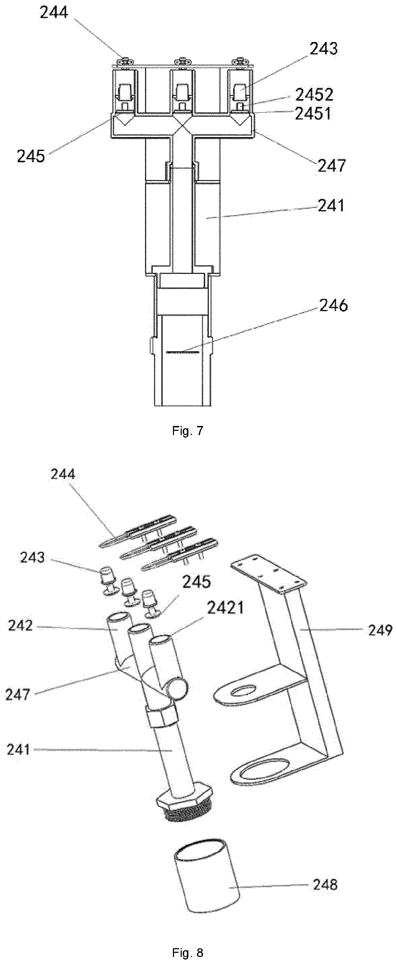

As shown in Figs. 6-8, a thermal runaway flue gas treatment apparatus for battery provided in the embodiment includes an exhaust cylinder 241, and a plurality of exhaust nozzles 242, a ignition switches 243, a ignition apparatuses 244, and a pressure valves 245. The exhaust nozzles 242 are respectively fixedly connected to the exhaust cylinder 241 to form an exhaust channel for the thermal runaway flue gas. The pressure valve 245 and the ignition switch 243 are arranged in the exhaust channel, the pressure valve 245 seals the exhaust channel at normal pressure, so that the exhaust channel keeping closed, and at high pressure, a piston in the pressure valve 245 is driven by the gas pressure to move, the exhaust channel is opened, while the pressure valve 245 presses against the ignition switch 243 to turn on the ignition apparatus 244. When the thermal runaway flue gas is generated in the battery, as the gas pressure gradually increases, the pistons in the plurality of pressure valves 245 are sequentially pushed by gradually increaseing the gas pressure, the ignition switches 243 are sequentially turned on, the ignition apparatuses 244 are started, and the thermal runaway flue gas is ignited. An anti-backfire valve 246 is further arranged in the exhaust cylinder 241. The pressure valve 245 is provided with a gasket 2451. The exhaust cylinder 241 and the exhaust nozzles 242 are respectively fixedly arranged on a fixed cylinder 247 to form a gas passage, so that the thermal runaway flue gas sequentially passes through the exhaust cylinder 241, the fixed cylinder 242, and the exhaust nozzles 242.

The pressure valve 245 of the embodiment is fixedly arranged at a joint of the fixed cylinder 247 and the exhaust nozzle 242, the pressure valve 245 is provided with a protrusion 2452, the ignition switch 243 is arranged in the exhaust nozzle 242, and when the piston of the pressure valve 245 moves, the protrusion 2452 presses against the ignition switch 243, and the ignition apparatus 244 is turned on. The ignition apparatus 244 is a pulse igniter, and the ignition apparatus 244 is fixedly mounted on the exhaust cylinder 241 by a support seat 249. The thermal runaway flue gas treatment apparatus for battery further includes a mounting part 248 to be mounted on a battery housing.

### Embodiment 9

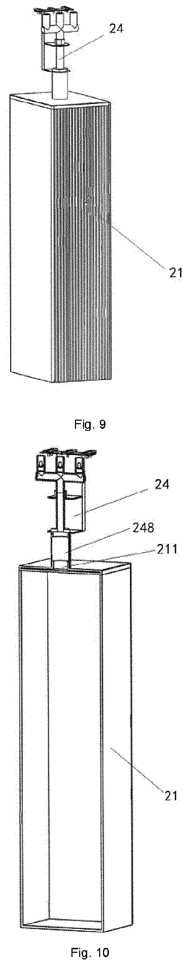

As shown in Fig. 9 and Fig. 10, the embodiment provides a battery housing 21, the embodiment includes the thermal runaway flue gas treatment apparatus for battery 24 in Embodiment 8. The battery housing 21 is connected to a mounting part 248 of the thermal runaway flue gas treatment apparatus for battery 24 through an explosion venting opening 211. When the number of batteries is large, the plurality of batteries are connected in parallel through a manifold, and the manifold is connected to the thermal runaway flue gas treatment apparatus for battery 24 through the mounting part 248. When the thermal runaway occurs in any single battery of a battery group, the generated thermal runaway flue gas is discharged to the thermal runaway flue gas treatment apparatus for battery 24 through the manifold for treatment. The apparatus is simple in structure, safe, small in size, environmentally friendly, and high in efficiency. The embodiment further provides a battery box and a battery, including the thermal runaway flue gas treatment apparatus for battery 24 in Embodiment 8.

### Embodiment 10

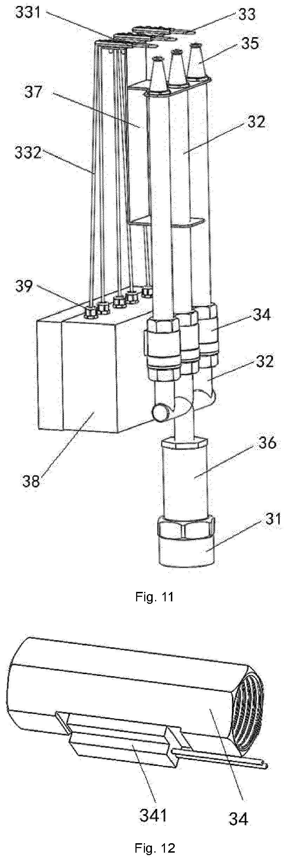

As shown in Figs. 11-13, a thermal runaway flue gas treatment apparatus for battery 24 provided in the embodiment includes a first exhaust pipe 31, at least one second exhaust pipe 32, at least one ignition apparatus 33, at least one exhaust nozzle 35, and at least one magnetic switch 34. Inlets of the second exhaust pipes 32 are connected to an outlet of the first exhaust pipe 31. The ignition apparatuses 33 are arranged at outlets of the second exhaust pipes 32, and the ignition apparatuses 33 are configured to ignite the thermal runaway flue gas discharged by the second exhaust pipes 32. The plurality of magnetic switches 34 are arranged on the second exhaust pipes 32 in a one-to-one correspondence manner, and the plurality of magnetic switches 34 are configured to send electrical signals to the ignition apparatuses 33 when the thermal runaway flue gas passes through the second exhaust pipes 32, so that the ignition apparatuses 33 are turned on to ignite the thermal runaway flue gas. The magnetic switch 34 is mechanical magnetic switch, gravity magnetic switch, or magnetic switch. The magnetic switch 34 is a normally closed switch, which may seal the first exhaust pipe 31 to avoid external water vapor or impurities from entering the first exhaust pipe 31. The exhaust nozzles 35 may specifically be of a conical pipe structure, large ends of the exhaust nozzles 35 are connected to outlet ends of the plurality of second exhaust pipes 32 in a one-to-one correspondence manner, the plurality of ignition apparatus 33 are arranged at outlets at small ends of the exhaust pipes 35 in a one-to-one correspondence manner, that is, the large ends of the conical exhaust nozzles are connected to the second exhaust pipes 32, and the ignition apparatuses 33 are arranged at the small ends of the conical exhaust nozzles 35. The exhaust nozzles 35 of this structure may enable the discharged thermal runaway flue gas to be ignited by the ignition apparatuses 33, the combustion of the thermal runaway flue gas is more sufficient, and part of the thermal runaway flue gas is prevented from leaking through the edges of the outlets of the second exhaust pipes 32. In addition, the first exhaust pipe 31 is further provided with an anti-backfire valve 36, configured to prevent backflow of the thermal runaway flue gas in the first exhaust pipe 31 and the second exhaust pipes 32, the anti-backfire valve 36 is specifically a one-way valve, and the check valve is simple in structure and convenient to mount.

In the thermal runaway flue gas treatment apparatus for battery of the embodiment, at least one second exhaust pipe 32, at least one magnetic switch 34, and at least one ignition apparatus 33 are provided. One second exhaust pipe 32 may share a pipeline with the first exhaust pipe 31, that is, the second exhaust pipe 32 and the first exhaust pipe 31 are one pipeline. During specific mounting and use, the number of the second exhaust pipes 32 and the ignition apparatuses 33 may be set according to the number and requirements of the batteries, and may be set to 2, 3, 4, or the like. When the number is set to 2 or more, the reliability of ignition may be ensured, and when a certain ignition device 33 fails or malfunctions, other ignition apparatuses 33 may operate normally. The ignition apparatus 33 may be of various structures, for embodiment, a pulse igniter or the like may be specifically used, and a power supply manner of the pulse igniter may be a dry battery or an alternating current according to a site environment. The magnetic switch 34 may also be of various structures, as long as the ignition apparatus 33 may be started when the thermal runaway flue gas passes, for embodiment, the magnetic switch 34 may be the mechanical magnetic switch, the gravity magnetic switch or the magnetic switch.

In order to enable the ignition apparatus 33 to be mounted more reliably and ensure the use safety, an ignition head 331 of the ignition apparatus 33 may be arranged on the second exhaust pipe 32 through a support 37, the ignition head 331 for the flue gas of the apparatus is 20 cm or more away from an upper end of the magnetic switch 34 to avoid the damage to the magnetic switch 34 caused by the heat transfer due to the combustion of a metal flue gas ignition pipe. A dry battery or alternating current interface of the pulse igniter is arranged in a power box 38, and a signal line 332 of the pulse igniter is connected to the power box 38 through a waterproof joint 39 in a sealed manner. The pulse igniter provides a power supply through a self-contained dry battery, may continuously perform pulse ignition for more than 3 hours, and then cooperate with a normally open magnetic induction switch, and when the thermal runaway flue gas passes, a pulse signal is output, and the combustible gas is ignited. The principle of the magnetic switch 34 is to push a magnetic valve core 342 in the switch through airflow or water flow, so that permanent magnets on the magnetic valve core 342 approach an inductor 341 on a black switch outside the switch to output a signal. When no gas or water flow exists, the two permanent magnets in the switch are reset and closed by the repulsive force, a spring switch is reset and closed by the elastic force of the spring, a gravity switch is reset and closed by the centripetal force of the gravity, but the gravity switch needs to be vertically mounted, and the signal line 332 of the inductor 341 passes through the power box 38 and is connected to a control circuit of the pulse igniter in the power box 38, thereby controlling the ignition of the ignition head 331 of the ignition apparatus 33.

The apparatus of the embodiment uses a combination of the magnetic switch and the pulse ignition to treat the ignition of the flue gas after the thermal runaway in the battery, the main combustible components of the flue gas are hydrogen, carbon monoxide, a hydrocarbon, and an electrolyte in a gasification state, and may be completely combusted after being ignited by the pulse igniter to generate a harmless product. The apparatus may ignite the flue gas generated by the thermal runaway to avoid the pollution of the thermal runaway flue gas to the atmosphere. At the same time, the dangerous events such as explosion and fire caused by the accumulation of the thermal runaway gas in the lithium battery are also avoided, so that the safety of the battery is greatly improved.

According to the thermal runaway flue gas treatment apparatus for battery of the present invention, the ignition apparatus 33 is started through the magnetic switch 34, the magnetic switch 34 outputs the signal through the magnetic valve core 342 and the inductor 341, and then the ignition apparatus 33 is triggered. The magnetic switch 34 is provided with relatively high sensitivity relative to the pressure switch, may achieve induction and triggering as long as the thermal runaway flue gas passes through the second exhaust pipe 32, and does not need a relatively high induction pressure relative to the pressure switch, that is, sensing may be achieved in the early or initial stage of the thermal runaway flue gas, and then the ignition apparatus 33 may be immediately triggered, so that the safety of the apparatus is relatively high. The ignition apparatus 33 may ignite the early or initial thermal runaway flue gas, so as to avoid environmental pollution or safety accidents caused by leakage of the early or initial thermal runaway flue gas through the outlet of the second exhaust pipe 32, so that the safety of the battery is improved to a certain extent. At the same time, the apparatus of the present invention is simple in structure and convenient to mount, and may be assembled by using the existing apparatus.

The embodiment further provides a battery group, the battery group includes the thermal runaway flue gas treatment apparatus for battery, at least one battery, and a manifold. An inlet of the first exhaust pipe 31 is connected to explosion venting openings or explosion venting pipes of a plurality of battery housings through the manifold, that is, one end of the manifold is connected to the explosion venting openings of the plurality of battery housings, while the other end thereof is connected to the inlet of the first exhaust pipe 31. When the thermal runaway occurs in a cell in one or more battery housings to cause the explosion venting opening to open, a high-temperature substance inside the battery enters the first exhaust pipe 31 and the second exhaust pipe 32 through the explosion venting opening or the explosion venting pipe, and at this time, the magnetic switch 34 starts the ignition apparatus 33 after sensing the thermal runaway flue gas, and the ignition apparatus 33 ignites the thermal runaway flue gas. In order to further increase the safety, a cooling apparatus may be connected to the explosion venting opening or the explosion venting pipe of the battery housing, the cooling apparatus is filled with a cooling material, and the thermal runaway flue gas is ignited after cooling and adsorption.

### Embodiment 11

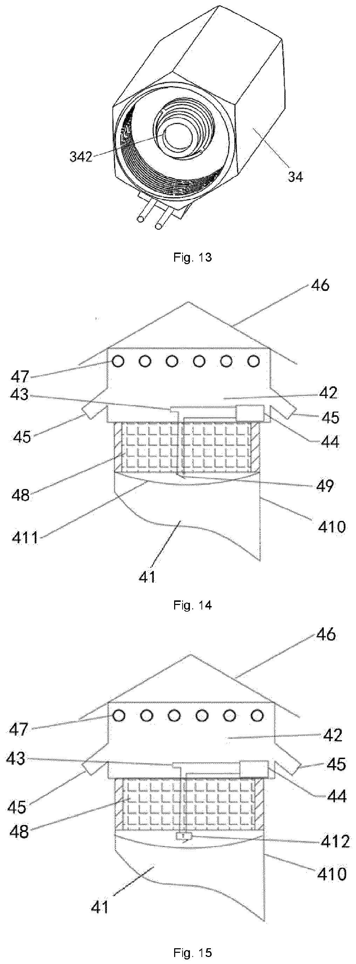

As shown in Figs. 14-17, a thermal runaway flue gas treatment apparatus for battery provided in the embodiment includes a combustion chamber 42, an ignition apparatus, and a trigger apparatus. The ignition apparatus is placed in the combustion chamber 42, and the trigger apparatus is electrically connected to the ignition apparatus. The combustion chamber 42 is connected to an electrolyte chamber inside the battery, the combustion chamber 42 is configured to store the thermal runaway flue gas generated by the thermal runaway in the battery, and the trigger apparatus is a pressure switch 49 and/or a temperature control switch 412 or an electrical connector pressure gage. The trigger apparatus is configured to trigger the ignition apparatus to ignite the thermal runaway flue gas according to the pressure and/or the temperature of the thermal runaway flue gas, so that the combustible components in the thermal runaway flue gas are reduced. In some embodiments, the combustible components in the thermal runaway flue gas are combusted to prevent the possibility of secondary ignition of the discharged combusted gas, thereby achieving the purpose of complete flame resistance. In some embodiments, the combustion chamber 42 of the embodiment is arranged on the side, to approach the explosion venting opening, of the battery. In some embodiments, the combustion of the thermal runaway flue gas in the combustion chamber 42 needs to continuously supplement combustion-supporting gas into the combustion chamber 42. At the same time, the remaining combusted gas in the combustion chamber 42 needs to be timely discharged. The thermal runaway flue gas treatment apparatus for battery further includes a thermal runaway flue gas exhaust pipe 41. The combustion chamber 42 is connected to the electrolyte chamber of the battery through the thermal runaway flue gas exhaust pipe 41. An explosion venting apparatus 410 is arranged in a pipe chamber of the thermal runaway flue gas exhaust pipe 41.

The ignition apparatus of the embodiment includes an igniter and a power supply 44. The igniter is placed inside the combustion chamber 42, and the power supply 44 is arranged inside or outside the combustion chamber 42. The power supply 44 is electrically connected to the igniter and the trigger apparatus, and the trigger apparatus is electrically connected to the igniter. The withstand temperature of the igniter and the power supply 44 is greater than 200°C. The ignition apparatus is a pulse igniter 43. The thermal runaway flue gas treatment apparatus for battery further includes an anti-backfire apparatus 48 arranged between the thermal runaway flue gas exhaust pipe 41 and the combustion chamber 42 and a wind shield 46 arranged at the top of the combustion chamber 42. The anti-backfire apparatus may ensure that the flame enters the inside of the battery when the thermal runaway flue gas is combusted in the combustion chamber, and the wind shield may prevent air from entering the combustion chamber to ensure sufficient combustion of the thermal runaway flue gas in the combustion chamber. A chamber wall of the combustion chamber 42 is provided with an air inlet 45, the air inlet 45 is configured to supplement combustion-supporting gas in the combustion chamber, and the combustion-supporting gas is air. The chamber wall of the combustion chamber 42 is provided with a vent hole 47, and the vent hole 47 is configured to discharge the remaining combusted gas.

The withstand temperature of the igniter and the power supply of the embodiment is greater than 200°C, which ensures that the igniter and the power supply may withstand the high temperature of the thermal runaway flue gas. When the trigger apparatus is the pressure switch 49 and/or the temperature control switch 412, the pressure switch 49 and/or the temperature control switch 412 are arranged between the explosion venting apparatus 410 and the combustion chamber 42, which facilitates triggering the pressure switch and/or the temperature control switch to be turned on through the high pressure or the high temperature of the thermal runaway flue gas in the thermal runaway flue gas exhaust pipe, and then triggering the igniter to ignite. When the trigger apparatus is the electrical connector pressure gage, the touch pressure of the electrical connector pressure gage is less than the explosion venting pressure of the explosion venting apparatus 410, and the electrical connector pressure gage is arranged between the electrolyte chamber of the battery and the combustion chamber 42, thereby facilitating directly turning on the electrical connector pressure gage through the high pressure generated inside the battery, and then triggering the igniter to ignite. When the trigger apparatus is the pressure switch 49 and the temperature control switch 412, the pressure switch 49 and the temperature control switch 412 are connected in parallel or in series. When the pressure switch and the temperature control switch are connected in parallel, the temperature control switch may be turned on through the high temperature or the pressure switch may be turned on through the high pressure. When the pressure switch and the temperature control switch are connected in series, it is necessary to turn on the temperature control switch through the high temperature and turn on the pressure switch through the high pressure, so that mistaken touch may be effectively prevented during series connection. The touch pressure of the electrical connector pressure gage is less than the explosion venting pressure of the explosion venting apparatus, which may ensure that the electrical connector pressure gage is provided with been turned on before the explosion venting apparatus is opened, and ensure that the ignition apparatus enters an ignition state in advance.

### Embodiment 12

As shown in Fig. 14, on the basis of Embodiment 11, the thermal runaway flue gas treatment apparatus for battery provided in the embodiment further includes the thermal runaway flue gas exhaust pipe 41. The trigger apparatus is the pressure switch 49. One end of the thermal runaway flue gas exhaust pipe 41 is connected to the electrolyte chamber inside the battery, while the other end thereof communicates with the combustion chamber 42, that is, the combustion chamber 42 is connected to the electrolyte chamber inside the battery through the thermal runaway flue gas exhaust pipe 41, and the explosion venting apparatus 410 is arranged in the thermal runaway flue gas exhaust pipe 41. The pressure switch 49 is arranged between the explosion venting apparatus 410 and the combustion chamber 42, the ignition apparatus includes the igniter and the power supply 44. The igniter is placed inside the combustion chamber 42, the power supply 44 is arranged inside or outside the combustion chamber 42, and the power supply 44, the pressure switch 49, and the ignition head are sequentially connected in series from front to back. In some embodiments, the pressure switch 49 of the embodiment is arranged at a gas outlet of thermal runaway flue gas exhaust pipe 41.

The explosion venting apparatus 410 of the embodiment is an explosion venting film 411 or an explosion venting valve. In some embodiments, the igniter and the power supply 44 of the embodiment have a withstand temperature of greater than 200°C, and may withstand the high temperature of the heat runaway flue gas in the combustion chamber 42. In some embodiments, the ignition apparatus of the embodiment is the pulse igniter 43. It is to be noted that the ignition apparatus of the embodiment may also be an igniter other than the pulse igniter 43. The power supply 44 of the embodiment is a rechargeable power supply.

The thermal runaway flue gas treatment apparatus for battery of the embodiment further includes the anti-backfire apparatus 48 arranged between the thermal runaway flue gas exhaust pipe 41 and the combustion chamber 42 and the wind shield 46 arranged at the top of the combustion chamber 42. The anti-backfire apparatus 48 may effectively prevent the flame in the combustion chamber 42 from entering the inside of the battery to ensure the operation safety of the battery, and the wind shield 46 may effectively prevent the air from entering the combustion chamber 42. The chamber wall of the combustion chamber 42 is provided with the air inlets 45, and the air inlets 45 are configured to supplement the combustion-supporting gas in the combustion chamber 42. In some embodiments, the auxiliary gas of the embodiment is air, and it is to be noted that the auxiliary gas may also be oxygen or other gas that may support combustion. Two air inlets 45 are provided in the embodiment, and are respectively arranged on two opposite sides of the combustion chamber 42. The chamber wall of the combustion chamber 42 is provided with the vent hole 47, and the vent hole 47 is configured to discharge the gas generated after combustion. The air inlets 45 of the embodiment are arranged at positions, close to the bottom, of the combustion chamber 42, and the vent hole 47 is arranged at a position, close to the top, of the combustion chamber 42.

### Embodiment 13

As shown in Fig. 15, on the basis of Embodiment 12, in the thermal runaway flue gas treatment apparatus for battery of the embodiment, the trigger apparatus is the temperature control switch 412. The temperature control switch 412 is arranged between the explosion venting apparatus 410 and the combustion chamber 42. In some embodiments, the temperature control switch 412 of the embodiment is arranged at the gas outlet of thermal runaway flue gas exhaust pipe 41.

### Embodiment 14

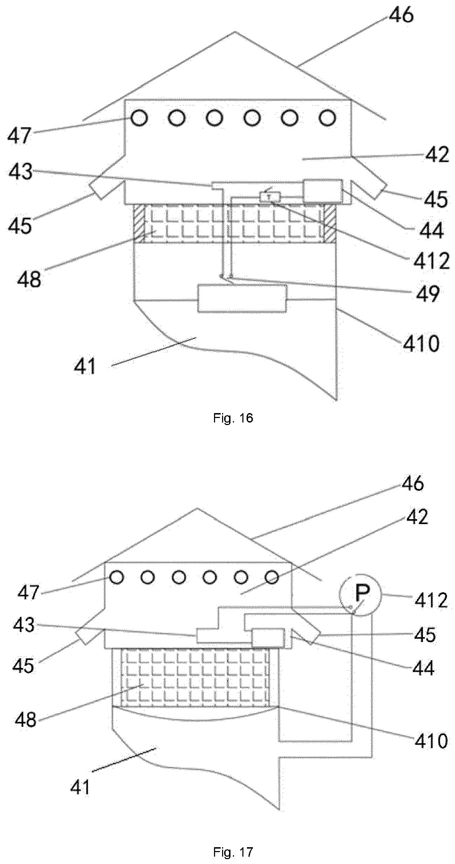

As shown in Fig. 16, on the basis of Embodiment 11, the thermal runaway flue gas treatment apparatus for battery provided in the embodiment further includes the thermal runaway flue gas exhaust pipe 41. The trigger apparatus is the pressure switch 49 and the temperature control switch 412. One end of the thermal runaway flue gas exhaust pipe 41 is connected to the electrolyte chamber inside the battery, while the other end thereof communicates with the combustion chamber 42, that is, the combustion chamber 42 is connected to the electrolyte chamber inside the battery through the thermal runaway flue gas exhaust pipe 41, and the explosion venting apparatus 410 is arranged in the thermal runaway flue gas exhaust pipe 41. The pressure switch 49 and the temperature control switch 412 are arranged between the explosion venting apparatus 410 and the combustion chamber 42, and the ignition apparatus includes the igniter and the power supply 44. The igniter is placed inside the combustion chamber 42, and the power supply 44 is arranged inside or outside the combustion chamber 42. The pressure switch 49 is arranged at the gas outlet of the thermal runaway flue gas exhaust pipe 41, and the temperature control switch 412 is arranged at the thermal runaway flue gas inlet of the combustion chamber 42. The power supply 44, the pressure switch 49, the temperature control switch 412, and the ignition head are sequentially connected in series from front to back, and when the pressure switch 49 and the temperature control switch 412 are connected in series, it is necessary to turn on the temperature control switch 412 through the high temperature and turn on the pressure switch 49 through the high pressure, so that mistaken touch may be effectively prevented. It is to be noted that the pressure switch 49 and the temperature control switch 412 may also be connected in parallel, and when the pressure switch and the temperature control switch are connected in parallel, the temperature control switch may be turned on through the high temperature and the pressure switch may be turned through the high pressure.

### Embodiment 15

As shown in Fig. 17, on the basis of Embodiment 11, the thermal runaway flue gas treatment apparatus for battery provided in the embodiment further includes the thermal runaway flue gas exhaust pipe 41. The trigger apparatus is the electrical connector pressure gage. One end of the thermal runaway flue gas exhaust pipe 41 is connected to the electrolyte chamber inside the battery, while the other end thereof communicates with the combustion chamber 42, that is, the combustion chamber 42 is connected to the electrolyte chamber inside the battery through the thermal runaway flue gas exhaust pipe 41, and the explosion venting apparatus 410 is arranged in the thermal runaway flue gas exhaust pipe 41. The electrical connector pressure gage is arranged between the electrolyte chamber of the battery and the combustion chamber 42, specifically, a tee pipe is connected to the explosion venting opening of the battery, so that the explosion venting opening is connected to a first interface of the tee pipe, a second interface of the tee pipe communicates with the combustion chamber 42 through the thermal runaway flue gas exhaust pipe 41, a third interface of the tee pipe is connected to the electrical connector pressure gage, the electrical connector pressure gage is connected to the ignition head, and the power supply 44 is configured to supply power to the electrical connector pressure gage and the ignition head.

The explosion venting apparatus 410 of the embodiment is an explosion venting film 411 or an explosion venting valve. In some embodiments, the explosion venting apparatus 410 of the embodiment is the explosion venting film 411. In some embodiments, the touch pressure of the electrical connector pressure gage of the embodiment is less than the explosion venting pressure of the explosion venting apparatus 410. In some embodiments, the igniter and the power supply 44 of the embodiment have a withstand temperature of greater than 200°C, and may withstand the high temperature of the heat runaway flue gas in the combustion chamber 42. In some embodiments, the ignition apparatus of the embodiment is the pulse igniter 43. It is to be noted that the ignition apparatus of the embodiment may also be an igniter other than the pulse igniter 43.

The chamber wall of the combustion chamber 42 of the embodiment is provided with the air inlets 45, and the air inlets 45 are configured to supplement the combustion-supporting gas in the combustion chamber 42. In some embodiments, the auxiliary gas of the embodiment is the air, and it is to be noted that the auxiliary gas may also be oxygen or other gas that may support combustion. In some embodiments, the air inlets 45 of the embodiment are arranged at positions, close to the bottom, of the combustion chamber 42, and the vent hole 47 is arranged at a position, close to the top, of the combustion chamber 42. In some embodiments, two air inlets 45 are provided in the embodiment, and are respectively arranged on two opposite sides of the combustion chamber 42. The chamber wall of the combustion chamber 42 is provided with the vent hole 47, and the vent hole 47 is configured to discharge the gas generated after combustion.

The working principle of the thermal runaway flue gas treatment apparatus for battery of the present invention is as follows: when thermal runaway occurs inside the battery, the pressure and the temperature inside the battery rise sharply, the explosion venting apparatus 410 is opened through the high pressure inside the battery, and the thermal runaway flue gas generated by the thermal runaway is discharged into the combustion chamber 42 through the thermal runaway flue gas exhaust pipe 41, and at the same time, the combustion-supporting gas is introduced into the combustion chamber 42, and the trigger apparatus is turned on, so that the ignition apparatus is in an ignition state; and when the thermal runaway flue gas continuously accumulates in the combustion chamber 42 and reaches the ignition condition, the thermal runaway flue gas is ignited and begins combustion, the combustible components in the thermal runaway flue gas are combusted or combusted until the concentration of the combustible components is too low to be ignited again, and the combusted gas is discharged into the atmosphere through the vent hole 47.

### Embodiment 16

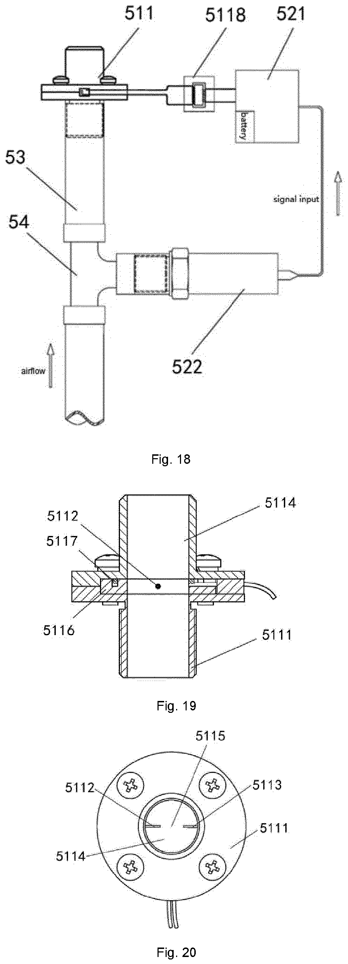

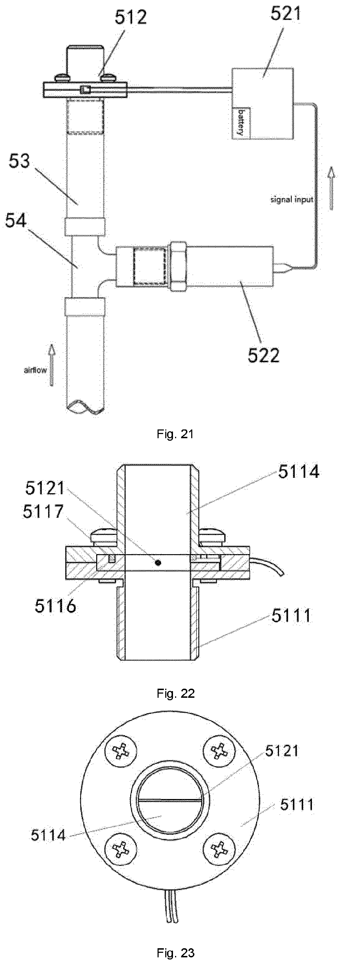

As shown in Figs. 18-26, a thermal runaway flue gas treatment apparatus for battery provided in the embodiment includes an igniter 51, a trigger apparatus 52, and a flue gas pipeline 53. The trigger apparatus 52 includes a control circuit board 521 and a sensor 522. The sensor 522 is arranged on the flue gas pipeline 53 or a battery housing, an output end of the sensor is connected to the control circuit board 521, which outputs a signal to the control circuit board 521 during the thermal runaway in the battery 55, and the control circuit board 521 outputs an ignition current according to the signal. The igniter 51 is an arc igniter 511 or a resistance wire igniter 512, the igniter 51 is arranged on the flue gas pipeline 53, and the thermal runaway flue gas discharged from the flue gas pipeline 53 is ignited under the ignition current output by the control circuit board 521. The apparatus may timely ignite the flue gas generated by the thermal runaway in the battery 55, so as to avoid the pollution of the generated thermal runaway flue gas to the ambient atmosphere. At the same time, the dangerous events such as explosion and fire caused by the accumulation of the thermal runaway gas in the battery 55 are also avoided, so that the safety of the battery is greatly improved. The igniter of the apparatus is the arc igniter 511 or the resistance wire igniter 512, and the arc igniter 511 or the resistance wire igniter 512 is a continuous ignition apparatus, so that the performance of the igniter 51 is prevented from being affected by wind or rain in the external environment, thereby avoiding the risk that the thermal runaway flue gas may not be ignited reliably. The apparatus may timely ignite the flue gas generated by the thermal runaway in the battery 55, so as to avoid the pollution of the discharged thermal runaway flue gas to the atmosphere. At the same time, the dangerous events such as explosion and fire caused by the accumulation of the thermal runaway gas in the battery 55 are also avoided, so that the safety of the battery 55 is greatly improved.

The structure of the resistance wire igniter 512 is not limited in the embodiment, as long as the thermal runaway flue gas generated by the battery 55 may be ignited timely and reliably. For embodiment, the resistance wire igniter 512 includes an igniter housing 5111, a resistance wire 5121, a ceramic chuck ring 5116, and a ceramic pressing ring 5117. An ignition chamber 5114 communicating with the flue gas pipeline 53 is arranged in the igniter housing 5111, the resistance wire 5121 is arranged in the ignition chamber 5114, and the resistance wire 5121 is connected to the control circuit board 521 outside the igniter housing 5111. Specifically, a ring groove is formed in the ceramic chuck ring 5116, and the resistance wire 5121 is arranged in the ring groove, and is pressed by the ceramic pressing ring 5117, so that the resistance wire 5121 is mounted in the igniter housing 5111 through the ceramic chuck ring 5116 and the ceramic pressing ring 5117. The ceramic chuck ring 5116 and the ceramic pressing ring 5117 are insulating pieces, so that good insulation between the igniter housing 5111 and the resistance wire 5121 is achieved. The resistance wire 5121 in the resistance wire igniter 512 is made of an iron chromium aluminum resistance wire, a nickel chromium resistance wire, or the like. Compared with an electric pulse igniter, the resistance wire igniter 512 is provided with the characteristics of simple structure and no need for circuit elements such as a voltage booster and an oscillator. The resistance wire igniter 512 is simple in structure and does not need the circuit elements such as the voltage booster and the oscillator, is arranged in the flue gas pipeline 53, and may also be used as a windproof electric heating wire to enable the thermal runaway flue gas in the battery 55 to be ignited reliably. The thermal runaway flue gas treatment apparatus for battery provided in the embodiment is an automatic control resistance wire ignition apparatus, which is mounted in the flue gas pipeline 53. When the combustible gas is detected in the flue gas pipeline 53, a signal is given to the control circuit board 521, and the control circuit board 521 is connected to the resistance wire 5121, so that the resistance wire 5121 is rapidly heated to the combustible temperature of the gas to ignite the gas, thereby preventing accumulation of a large amount of gas.

The arc igniter 511 in the embodiment may also be of various structures, and is arranged on the flue gas pipeline 53 to ignite the thermal runaway flue gas in the battery discharged from the flue gas pipeline 53 under the ignition current output by the control circuit board 521. For embodiment, the arc igniter 511 includes the igniter housing 5111, a first resistance wire 5112, a second electronic wire 5113, the ceramic chuck ring 5116, and the ceramic pressing ring 5117. The ignition chamber 5114 communicating with the flue gas pipeline 53 is arranged in the igniter housing 5111, one end of the first electrode wire 5112 and one end of the second electrode wire 5113 are arranged in the ignition chamber 5114, an ionization gap 5115 is arranged between the two, and the other ends of the first electrode wire 5112 and the second electrode wire 5113 are connected to the control circuit board 521 through high-temperature wires. In addition, the control circuit board 521 is provided with an oscillating circuit, configured to convert a direct current into an alternating current, and a booster coil 5118 is arranged between the arc igniter 511 and the control circuit board 521, and is configured to boost and convey the alternating current output by the control circuit board 521 to the first electrode wire 5112 and the second electrode wire 5113 to ionize air between the two to generate an arc. In the apparatus, the ring groove is formed in the ceramic chuck ring 5116, and the first electrode wire 5112 and the second electrode wire 5113 is arranged in the ring groove, and are pressed by the ceramic pressing ring 5117, so that the first electrode wire 5112 and the second electrode wire 5113 are mounted in the igniter housing 5111 through the ceramic chuck ring 5116 and the ceramic pressing ring 5117. The ceramic chuck ring 5116 and the ceramic pressing ring 5117 are insulating pieces, which may prevent the first electrode wire 5112 and the second electrode wire 5113 from being in contact with the igniter housing 5111, thereby achieving good insulation between the igniter housing 5111 and the electrode wire. The booster coil 5118 is arranged between the arc igniter 511 and the control circuit board 521, and is configured to boost and convey the alternating current output by the control circuit board 521 to the first electrode wire 5112 and the second electrode wire 5113 to ionize the air between the two to generate the arc. The voltage of a booster circuit (that is, the booster coil 5118) of the arc igniter 511 is about 100 kv and is much higher than that of the pulse igniter 51, so that the arc igniter 511 is provided with the characteristics of fast arcing, fast ignition speed, and the like, and may quickly ignite the thermal runaway flue gas in the battery. In addition, the control circuit board 521 is provided with the oscillating circuit, configured to convert the direct current into the alternating current. In the arc igniter 511 of the embodiment, the first electrode wire 5112 and the second electrode wire 5113 are made of an alloy such as a copper chromium alloy and a copper tungsten alloy.

The thermal runaway flue gas treatment apparatus for battery provided in the embodiment is an automatic control arc ignition apparatus, which is mounted at an end of the flue gas pipeline 53. When the sensor 522 detects the combustible gas in the flue gas pipeline 53, a signal is fed back to the control circuit board 521, the control circuit board 521 is connected to the battery 55 and the booster coil 5118, and after the voltage is boosted by the booster coil 5118, air between arc generation heads close to each other is ionized to form an arc, and the combustible gas discharged from the flue gas pipeline 53 is ignited. That is, when the thermal runaway occurs in the battery 55, and the gas flows through the flue gas pipeline 53, the pressure sensor 522 detects a change in the pressure in the flue gas pipeline 53 (or when the pressure sensor 522 detects the flowing of the combustible gas, or the temperature sensor 522 detects a sharp rise in temperature), and the sensor 522 transmits the signal to the control circuit board 521. After the control circuit board 521 receives the signal, a relay is closed, the direct current of the battery 55 is converted into the alternating current through an oscillating current (or an oscillator) on the control circuit board 521 to be output into the booster coil 5118, the current is boosted to 50 kV high voltage instantly through the booster coil 5118, and then is transmitted to the first electrode wire 5112 and the second electrode wire 5113 of the igniter 51 through the high-temperature wires. When a distance between the first electrode wire 5112 and the second electrode wire 5113 is less than 8 mm, the instant high voltage may ionize the air between the first electrode wire 5112 and the second electrode wire 5113 to generate the arc, and the combustible gas in the flue gas pipeline 53 may be ignited when encountering the arc.

The trigger apparatus 52 of the present invention may be the sensor 522 of different structures, as long as the signal may be sent during the thermal runaway in the battery 55, that is, parameters such as temperature, pressure or gas volume fraction are detected in real time during the thermal runaway in the battery, and when the parameter exceeds a set threshold, the signal may be sent. The signal may be an electrical signal, a mechanical signal, or the like. Specifically, the sensor 522 may be at least one of a pressure sensor, a gas sensor or a temperature sensor, and the pressure sensor, the gas sensor and the temperature sensor is specifically arranged on the flue gas pipeline 53 or the battery housing. When mounted on site, the pressure sensor, the gas sensor or the temperature sensor is arranged on the flue gas pipeline 53 through the tee pipe 54, or is in threaded connection with the battery housing. Through the mounting, the thermal runaway flue gas may be detected directly and quickly, and reliable detection may be performed at the initial or early stage of the thermal runaway in the battery 55, so that the thermal runaway flue gas in the battery may be treated timely.

In order to achieve the reliable ignition of the thermal runaway gas in the battery, a plurality of igniters 51 may also be mounted. At this time, the flue gas pipeline 53 includes a flue gas main pipe 531 and a plurality of flue gas branch pipes 532. Inlets of the plurality of flue gas branch pipes 532 communicate with an outlet of the flue gas main pipe 531, and outlets of the plurality of flue gas branch pipes 532 are respectively provided with the igniter 51. Accordingly, a plurality of trigger apparatuses 52 are further provided, and the plurality of trigger apparatuses 52 are arranged on the plurality of flue gas branch pipes 532 in a one-to-one correspondence manner. At the same time, the flue gas main pipe 531 or the flue gas branch pipe 532 is further provided with an anti-backfire apparatus, and the anti-backfire apparatus may be an anti-backfire valve, configured to prevent backflow of the thermal runaway flue gas in the flue gas main pipe 531 or the flue gas branch pipe 532. During specific mounting and use, the number of the flue gas branch pipes 532 and the igniters 51 may be set according to the number and requirements of the batteries 55, and may be set to 2, 3, 4 to 10, etc. When the number is set to 2 or more, the reliability of ignition may be ensured, and when a certain igniter 51 fails or malfunctions, other igniters 51 may operate normally.

The embodiment further provides a battery 55, including the thermal runaway flue gas treatment apparatus for battery. An inlet of a flue gas pipeline 53 is connected to an explosion venting opening or an explosion venting pipe 56 of a battery housing.

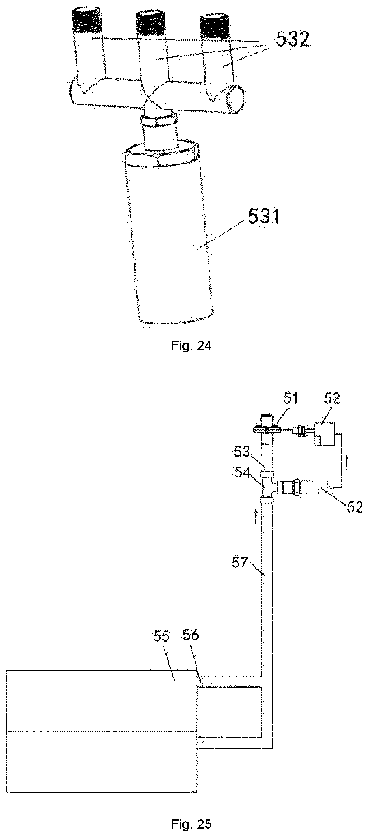

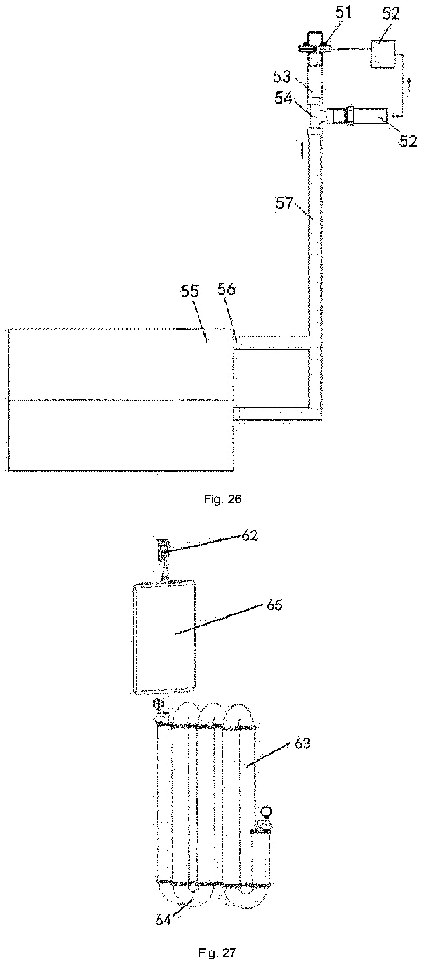

As shown in Fig. 25 and Fig. 26, the embodiment further provides a battery group, including a manifold 57, a plurality of batteries 55, and the thermal runaway flue gas treatment apparatus for battery. The plurality of batteries 55 are connected in parallel or in series, one end of the manifold 57 is connected to explosion venting openings or explosion venting pipes 56 of the plurality of battery housings, while the other end thereof is connected to an inlet of a flue gas pipeline 53. The flue gas pipeline 53 includes a flue gas main pipe 531 and a plurality of flue gas branch pipes 532. An inlet of the flue gas main pipe 531 is connected to the explosion venting openings or the explosion venting pipes 56 of the plurality of battery housings through the manifold 57, that is, one end of the manifold 57 is connected to the explosion venting openings of the plurality of battery housings, while the other end thereof is connected to the inlet of the flue gas main pipe 531. The outlets of the plurality of flue gas branch pipes 532 are respectively provided with an igniter 51, at the same time, the plurality of flue gas branch pipes 532 are respectively provided with a sensor 522. When the thermal runaway occurs in the plurality of batteries 55 to cause the explosion venting openings or the explosion venting pipes 56 to open, high-temperature substances inside the batteries 56 may enter the flue gas main pipe 531 and the flue gas branch pipes 532 through the explosion venting openings or the explosion venting pipes 56, and at this time, the trigger apparatus 52 starts the igniter 51 after sensing the thermal runaway flue gas, and the igniter 51 ignites the thermal runaway flue gas in the batteries 55. In order to further increase the safety, a cooling apparatus may be connected to the explosion venting opening or the explosion venting pipe 56 of the battery housing, the cooling apparatus is filled with a cooling material, and the thermal runaway flue gas is ignited through the apparatus after cooling and adsorption.

### Embodiment 17

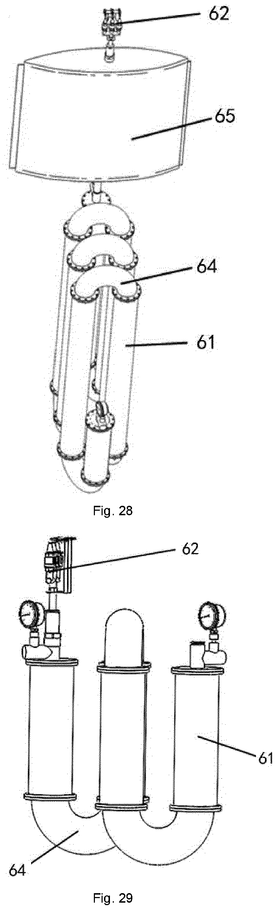

As shown in Figs. 27-30, a thermal runaway flue gas treatment apparatus for battery provided in the embodiment includes a cooling adsorption unit 61 and a flue gas ignition apparatus 62. The cooling adsorption unit 61 includes N cans 63 which are sequentially connected in series. The N cans 63 are filled with cooling materials and/or adsorption materials for cooling and/or adsorption of the thermal runaway gas in the battery, where N is an integer greater than or equal to 1. The flue gas ignition apparatus 62 is arranged at an outlet end of the Nth can 63, and the flue gas ignition apparatus is configured to ignite the cooled and absorbed flue gas. The arrangement and the internal structure of the cans 63 are not limited in the embodiment, as long as the use requirements may be met. The cooling materials and/or the adsorption materials inside the cans 63 may be partially or completely filled to meet different use requirements. The thermal runaway flue gas in the battery may reduce the temperature and flow of the flue gas through the cooling adsorption chamber. In order to prevent the existence of the combustible components such as hydrogen, carbon monoxide, and methane after cooling and/or adsorption of the N cans 63, the flue gas ignition apparatus 62 is arranged at the outlet end of the Nth can 63, and the flue gas ignition apparatus is configured to ignite the cooled and absorbed flue gas, so that the combustible components in the flue gas may be consumed, thereby preventing safety accidents caused by the fact that the combustible substances in the flue gas enter the air.

The thermal runaway flue gas treatment apparatus for battery provided in the embodiment specifically includes the cooling adsorption unit 61 and the flue gas ignition apparatus 62 which are connected. The cooling adsorption unit 61 includes eight cans 63. The eight cans 63 are filled with the cooling materials, or the eight cans 63 are filled with the adsorption materials, or the first to fourth cans 63 are filled with the cooling materials, or the fifth to eighth cans 63 are filled with the adsorption materials, and the eight cans 63 are linearly arranged in a row. The flue gas ignition apparatus 62 is arranged at the outlet end of the eighth can 63, and is configured to ignite the cooled and absorbed flue gas.

In the embodiment, the adjacent cans 63 are connected in series through an elbow pipe 64, and a buffer return chamber of the flue gas is formed in the elbow pipe 64. Two porous plates are respectively arranged in the first to fourth cans 63, and the two porous plates are axially connected through a connecting rod with threads at both ends, that is, both ends of the connecting rod pass through the porous plates respectively and are fixed by nuts, and the two adjacent porous plates and an inner wall of the can 63 form a cooling adsorption chamber filled with a ceramic ball. Similarly, two porous plates are respectively arranged in the fifth to eighth cans 63, and the two adjacent porous plates and the inner wall of the can 63 form the cooling adsorption chamber filled with activated carbon. The thermal runaway flue gas in the battery reduces the temperature and flow through the first to fourth cans 63, and then enters the fifth to eighth cans 63 for adsorption treatment, so that the purification effect is improved. The outlet end of the eighth can 63 is provided with the flue gas ignition apparatus 62 to ignite the cooled and absorbed flue gas, so as to prevent safety accidents caused by the existence of the combustible substances such as hydrogen, carbon monoxide and methane in the cooled and absorbed flue gas.

The shape of the can 63 is not limited in the embodiment, as long as the can 63 may be filled with the cooling material and/or the adsorption material. In the embodiment, the can 63 In some embodiments uses a round can 63 with better stress and pressure resistance. In the embodiment, the cooling material may be one or a combination of honeycomb ceramic, silicon dioxide, alumina, zirconia, and titanium oxide. The adsorption material may also be one or a combinations of graphite, alumina, montmorillonite, silicate, phosphate, and porous glass.

In the embodiment, the eighth can 63 is further fixedly provided with an anti-backfire unit to prevent the backflow of the flue gas. A collection unit 65 is further arranged between the eighth can 63 and the flue gas ignition apparatus 62, the collection unit 65 may collect the combustible components in the flue gas, and ignite at the outlet end after the gas amount reaches a threshold. If the gas amount does not reach the threshold, the flue gas ignition apparatus 62 is not started, which increases the collection unit 65 as a line of defense in front of the flue gas ignition apparatus 62 and improves the safety. In the embodiment, the flue gas ignition apparatus 62 is a pulse igniter, and the flue gas ignition apparatus 62 further includes an air inlet for introducing air and mixing and igniting with the thermal runaway flue gas.

### Embodiment 18

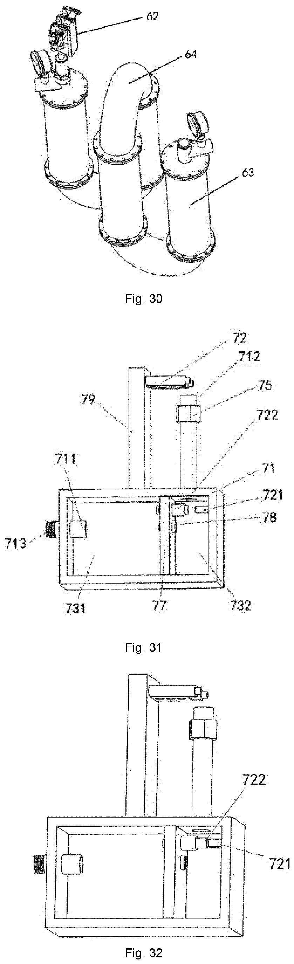

As shown in Fig. 31 and Fig. 32, a thermal runaway flue gas treatment apparatus for battery provided in the embodiment includes a gas storage cabin 71 and an ignition apparatus 72. The gas storage cabin 71 includes a gas inlet 711 and an exhaust port 712 to input and discharge the thermal runaway flue gas. The ignition apparatus 72 is fixedly arranged at an outlet of the exhaust port 712 outside the gas storage cabin 71, and is configured to ignite the thermal runaway flue gas. The gas storage cabin 71 is separated by a partition board 77 into a first cabin 731 and a second cabin 732 that are independent from each other, the gas inlet 711 is arranged in the first cabin 731, and the exhaust port 712 is arranged in the second cabin 732. A switch assembly is further arranged in the second cabin 71, and the switch assembly includes an ignition switch 721 fixed in the second cabin 732 and a trigger apparatus 722 arranged on the partition board 77 and penetrating through the partition board 77. The ignition switch 721 may be pressed and triggered by the trigger apparatus 722 to start the ignition apparatus. The partition board 77 is further provided with a pressure relief valve 78 to enable the thermal runaway flue gas to enter the second cabin 712 from the first cabin 711 through the pressure relief valve 78.

When the gas pressure of the first cabin 731 increases and reaches a first threshold P₁, the thermal runaway flue gas enters the second chamber 732 through the pressure relief valve 78 and reaches the outlet through the exhaust port 712. When the gas pressure of the first cabin 731 increases and reaches a second threshold P₂, the trigger apparatus 722 presses against the ignition switch 721, and the ignition switch 721 starts the ignition apparatus 72 to combust the thermal runaway flue gas. In the embodiment, the first threshold P₁ is not less than the second threshold P₂, so as to avoid air pollution and even danger caused by the fact that the thermal runaway flue gas is discharged out of the gas storage cabin 71 through the pressure relief valve 78 before the trigger apparatus 722 does not press against the ignition switch 721 and the ignition apparatus 72 is not started. When the trigger apparatus 722 penetrating through the partition board 77 is pushed by the gas pressure, the ignition switch 721 is touched to start the ignition apparatus 72.

In the embodiment, the exhaust port 712 may be provided as a pipeline, and a check flow valve 75 is fixed to the pipeline to control the flow of the thermal runaway flue gas. The exhaust port 712 may further be provided with at least two exhaust nozzles, the plurality of exhaust nozzles may play a role of pressure equalization and efficient ignition, a plurality of ignition heads are arranged in cooperation with the plurality of exhaust nozzles, the number of the exhaust nozzles and the number of the ignition heads may be kept consistent or inconsistent, and the plurality of ignition heads may efficiently ignite the thermal runaway flue gas discharged by the plurality of exhaust ports. A support part 79 is further arranged outside the gas storage cabin 71, and is configured to fixedly mount the ignition apparatus 72. The ignition apparatus 72 in the embodiment is a pulse igniter.

### Embodiment 19

As shown in Figs. 31-33, a battery housing provided in the embodiment includes the thermal runaway flue gas treatment apparatus for battery. The thermal runaway flue gas treatment apparatus for battery includes a gas storage cabin 71 and an ignition apparatus 72. The gas storage cabin 71 includes a gas inlet 711 and an exhaust port 712 to input and discharge the thermal runaway flue gas. The ignition apparatus 72 is fixedly arranged at the exhaust port 712 outside the gas storage cabin 71, and is configured to ignite the thermal runaway flue gas. The gas storage cabin 71 is separated by a partition board 77 into a first cabin 731 and a second cabin 732 that are independent from each other, the gas inlet 711 is arranged in the first cabin 731, and the exhaust port 712 is arranged in the second cabin 732. A switch assembly is further arranged in the second cabin 71, and the switch assembly includes an ignition switch 721 fixed in the second cabin 732 and a trigger apparatus 722 arranged on the partition board 77 and penetrating through the partition board 77. The ignition switch 721 may be pressed and triggered by the trigger apparatus 722 to start the ignition apparatus. The partition board 77 is further provided with a pressure relief valve 78 to enable the thermal runaway flue gas to enter the second cabin 712 from the first cabin 711 through the pressure relief valve 78.

When the gas pressure of the first cabin 731 increases and reaches a first threshold P₁, the thermal runaway flue gas enters the second chamber 732 through the pressure relief valve 78 and reaches the outlet through the exhaust port 712. When the gas pressure of the first cabin 731 increases and reaches a second threshold P₂, the trigger apparatus 722 presses against the ignition switch 721, and the ignition switch 721 starts the ignition apparatus 72 to combust the thermal runaway flue gas. In the embodiment, the first threshold P₁ is not less than the second threshold P₂, so as to avoid air pollution and even danger caused by the fact that the thermal runaway flue gas is discharged out of the gas storage cabin 71 through the pressure relief valve 78 before the trigger apparatus 722 does not press against the ignition switch 721 and the ignition apparatus 72 is not started. In the embodiment, the gas inlet 711 extends radially outside the gas storage cabin 71, and is provided with a mounting part 713, and the mounting part 713 is an external thread and is fixedly connected to an explosion venting opening of the battery housing.

The embodiment provides a battery, including a cell, an electrode assembly, and the battery housing. The embodiment provides a battery box, including thethermal runaway flue gas treatment apparatus for battery. The embodiment provides a battery group, including a plurality of batteries, and further including a manifold. One end of the manifold includes a plurality of branch pipes connected to the venting openings one by one, and the other end of the manifold is fixedly connected to the mounting part of the thermal runaway flue gas treatment apparatus for battery. When the thermal runaway occurs in the battery group, the thermal runaway flue gas may be conveyed to thethermal runaway flue gas treatment apparatus for battery through the manifold.

### Embodiment 20

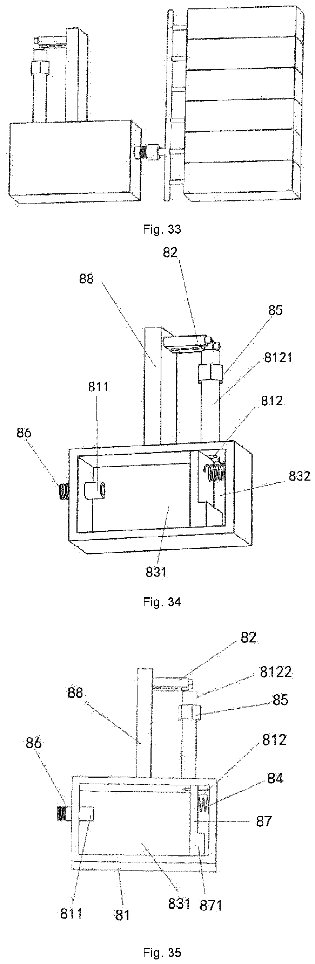

As shown in Fig. 34 and Fig. 35, a thermal runaway flue gas treatment apparatus for battery provided in the embodiment includes a gas storage cabin 81 and an ignition apparatus 82. The gas storage cabin 81 includes a gas inlet 811 and an exhaust port 812 to input and discharge the thermal runaway flue gas. The ignition apparatus 82 is fixedly arranged at the exhaust port 812 outside the gas storage cabin 81. The gas storage cabin 11 in the embodiment is a rectangular box body, and may also be designed into other shapes according to requirements. The gas storage cabin 81 is separated by a movable partition board 87 into a first cabin 831 and a second cabin 832 that are independent from each other, the gas inlet 811 is arranged in the first cabin 831, and the exhaust port 812 is arranged in the second cabin 832. A switch assembly is further arranged in the second cabin 832, and the switch assembly includes an ignition switch 821. When the gas pressure in the first cabin 831 increases, and the movable partition board 87 is pushed by the gas pressure in the first cabin 831, the ignition switch 821 is touched to start the ignition apparatus 82, and the exhaust port 812 is at least partially exposed to the first cabin 831 to discharge the thermal runaway flue gas. The second cabin 832 is provided with an elastic assembly 84 fixedly arranged on the movable partition board 87 to limit the movable partition board 87 from being pushed by a relatively small gas pressure. The movable partition board 87 is provided with a gasket to keep the first cabin 831 and the second cabin 832 airtight. The exhaust port 812 is provided with a pipeline 8121, and the pipeline 8121 is provided with at least one exhaust nozzle 8122. The number of the exhaust nozzles may be adjusted according to actual needs, and the number of the ignition apparatuses may be adjusted accordingly. A check flow valve 85 is fixed to the pipeline 8121 to control the flow of the thermal runaway flue gas. The elastic assembly 84 abuts between the second cabin 832 and the movable partition board 87. The gas storage cabin 81 includes a mounting part 86, configured to be fixedly mounted on the battery. The ignition apparatus 82 is a pulse igniter, and the ignition apparatus 82 is fixed to the gas storage cabin 81 by a support seat 88. The movable partition board 87 is provided with a stabilization seat 871, configured to stabilize the activity of the movable partition board 87.

### Embodiment 21

As shown in Figs. 35-36, the embodiment provides a battery housing, including the thermal runaway flue gas treatment apparatus for battery 810. The thermal runaway flue gas treatment apparatus for battery 810 is the thermal runaway flue gas treatment apparatus for battery in Embodiment 20. The battery housing is connected to a manifold through an explosion venting opening, a plurality of batteries are connected in parallel, and the manifold is connected to the thermal runaway flue gas treatment apparatus for battery through a mounting part 86 of the thermal runaway flue gas treatment apparatus for battery. When the thermal runaway occurs in any single battery of a battery group, the generated thermal runaway flue gas is discharged to the thermal runaway flue gas treatment apparatus for battery through the manifold for treatment. The apparatus is simple in structure, safe, small in size, environmentally friendly, and high in efficiency.

### Embodiment 22

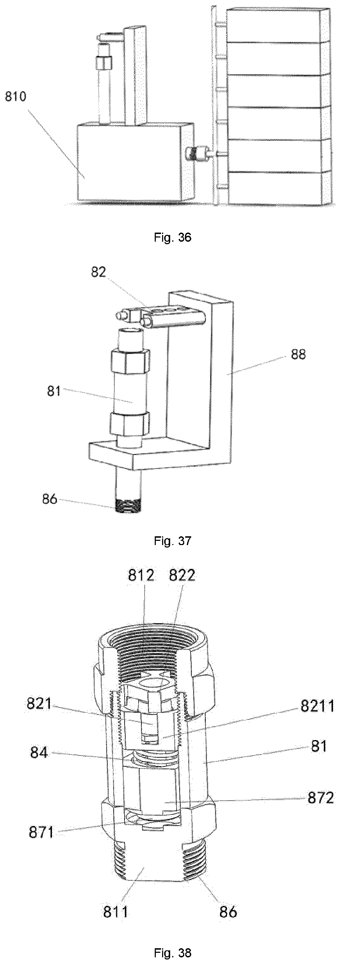

As shown in Figs. 37-39, in a thermal runaway flue gas treatment apparatus for battery provided in the embodiment, a gas storage cabin 81 is a cylinder, and the gas storage cabin 81 is separated by a movable partition board into a first cabin and a second cabin that are independent from each other. A gas inlet 811 is arranged in the first cabin, and an exhaust port 812 is arranged in the second cabin. A switch assembly is further arranged in the second cabin, and includes an ignition switch 821. When the gas pressure in the first cabin increases, and the movable partition board is pushed by the gas pressure in the first cabin, the ignition switch 821 is touched to start the ignition apparatus 82, and the exhaust port 812 and the exhaust port 811 form a through exhaust channel to discharge the thermal runaway flue gas.

The first cabin is provided with an elastic assembly 84 fixedly arranged on the movable partition board to limit the movable partition board from being pushed by a relatively small gas pressure. The gas storage cabin 81 includes a mounting part 86, configured to be fixedly mounted on the battery. The ignition apparatus 82 is a pulse igniter, and the ignition apparatus 82 is fixed on the gas storage cabin 81 by a support seat 88. The movable partition board 87 is provided with a base 871 and a protrusion 872, and the protrusion 872 may be inserted into the gas inlet 811, so that the gas inlet 811 is kept closed under normal pressure, and the protrusion 872 is provided with a gasket to keep the first cabin and the second cabin airtight. The base 871 moves in an axial direction of the cylinder and forms a gap with the cylinder. In the embodiment, the base is square, and may also be hexagonal, octagonal ortriangular, depending on the effect of generating a gap with the cylinder, so as to enable the thermal runaway flue gas to pass. The base 871 is further provided with the ignition switch 821, the ignition switch 821 is provided with a mounting seat 8211, the elastic assembly 84 is arranged between the mounting seat 8211 and the base 871, and a touch block 822 is further arranged near the gas outlet 812 in the cylinder. The ignition switch 821 and the touch block 822 are collectively referred to as the switch assembly, and the positions of the ignition switch and the touch block may be adjusted according to actual needs. In the embodiment, the exchange of the positions of the ignition switch and the touch block may also achieve the purpose of starting the ignition apparatus.

When the thermal runaway gas passes through the gas inlet 811, due to the increase in pressure, the protrusion 871 is jacked up, the gas inlet 811 is opened, the thermal runaway flue gas reaches the gas outlet 812 through the cylinder, at the same time, the elastic assembly 84 is compressed, the ignition switch 821 is pressed by the trigger block 822 after being moved upwards by the mounting seat 8211, and the ignition apparatus 82 is started to ignite the thermal runaway flue gas of the gas outlet 812. The gas storage cabin 81 is further provided with the support seat 88, and the ignition apparatus 82 is fixed to the gas storage cabin 81. The apparatus is small in size, easy to mount, convenient to use, low in cost, and high in efficiency.

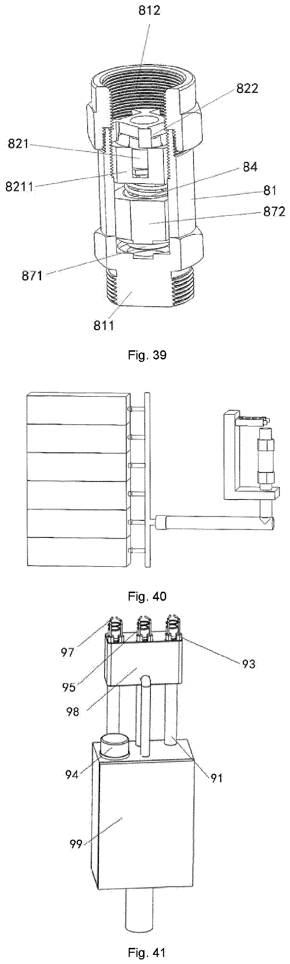

As shown in to Fig. 40, the embodiment further provides a battery housing, including the thermal runaway flue gas treatment apparatus for battery. The battery housing is connected to a manifold through an explosion venting opening, a plurality of batteries are connected in parallel, and the manifold is connected to the thermal runaway flue gas treatment apparatus for battery through a mounting part of the thermal runaway flue gas treatment apparatus for battery. When the thermal runaway occurs in any single battery of a battery group, the generated thermal runaway flue gas in the battery is discharged to the treatment apparatus for the thermal runaway flue gas through the manifold for treatment. The apparatus is simple in structure, safe, small in size, environmentally friendly, and high in efficiency. The embodiment further provides a battery group, especially a high-capacity battery, including the thermal runaway flue gas treatment apparatus for battery. The embodiment further provides a battery box, including the thermal runaway flue gas treatment apparatus for battery.

### Embodiment 23

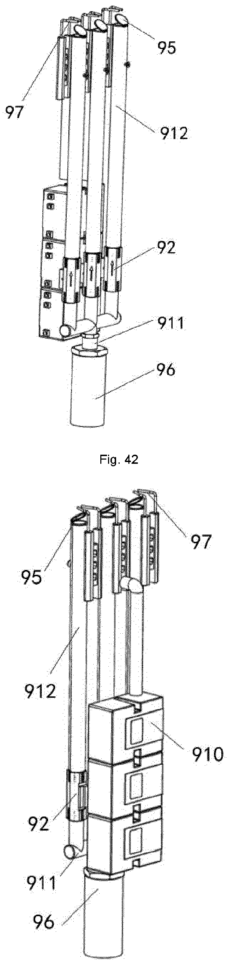

As shown in Figs. 41-43, a thermal runaway flue gas treatment apparatus for battery provided in the embodiment includes a flue gas ignition apparatus and an alarm assembly 94. The flue gas ignition apparatus includes an exhaust pipe 91, a trigger apparatus 93, and an ignition apparatus 92. The trigger apparatus 92 is arranged on the exhaust pipe 91, and is configured to start the ignition apparatus 93 when the thermal runaway flue gas passes through the exhaust pipe 91, the ignition apparatus 93 is arranged at an outlet end of the exhaust pipe 91, and is configured to ignite the thermal runaway flue gas in the exhaust pipe 91. The alarm assembly 94 is configured to send an alarm signal when the ignition apparatus 93 is started. The thermal runaway flue gas treatment apparatus for battery may ignite the flue gas generated by the thermal runaway during the thermal runaway in the battery, so as to avoid the pollution of the thermal runaway flue gas to the atmosphere. At the same time, the dangerous events such as explosion and fire caused by the accumulation of the thermal runaway gas in the lithium battery are also avoided, so that the safety of the battery is greatly improved. The alarm assembly 94 may send the alarm signal when the ignition apparatus 93 is started, so as to achieve a warning effect, so that a worker may timely treat the thermal runaway battery, and the alarm assembly 94 may accurately locate the thermal runaway battery, so that the worker may perform accurate and timely treatment. At the same time, the apparatus of the present invention is simple in structure and convenient to mount, and may be assembled by using the existing apparatus.

One or more exhaust pipes 91 may be provided in the present invention, and if a plurality of exhaust pipes 91 are provided, a multi-pipe structure is used, and for embodiment, specifically includes a first exhaust pipe 911 and second exhaust pipes 912. A plurality of second exhaust pipes 912, a plurality of trigger apparatuses 92, and a plurality of ignition apparatuses 93 are provided. Inlets of the plurality of second exhaust pipes 912 are connected to an outlet of the first exhaust pipe 911. The plurality of ignition apparatuses 93 are arranged at outlets of the second exhaust pipes 912. The plurality of trigger apparatuses 92 are arranged on the plurality of second exhaust pipes 912 in a one-to-one correspondence manner. At the same time, the exhaust pipe 91 or the first exhaust pipe 911 is further provided with the anti-backfire apparatus 96, and the anti-backfire apparatus 96 may be an anti-backfire valve, configured to prevent backflow when the thermal runaway flue gas in the exhaust pipe 91 or the first exhaust pipe 911 is ignited. During specific mounting and use, the number of the second exhaust pipes 912 and the ignition apparatuses 93 may be set according to the number and requirements of the batteries, and may be set to 2, 3, 4, or the like. When the number is set to 2 or more, the reliability of ignition may be ensured, and when a certain ignition device 93 fails or malfunctions, other ignition apparatuses 93 may operate normally.

The trigger apparatus 92 may specifically be an ignition switch, the ignition switch is one of a pressure switch and a magnetic switch, the magnetic switch may also be of various structures, as long as the ignition apparatus 93 may be started when the thermal runaway flue gas passes, for embodiment, the magnetic switch may be a mechanical magnetic switch, a gravity magnetic switch, a magnetic switch, or the like. The ignition apparatus 93 may be of various structures, for embodiment, a pulse igniter or the like may be specifically used, and a power supply manner of the pulse igniter may be a dry battery or an alternating current according to a site environment.

The alarm assembly 94 may be of various structures, or may be integrated, or may be split, for embodiment, a sound alarm apparatus and/or a light alarm apparatus may be used. The sound alarm apparatus may specifically be a buzzer, the light alarm apparatus may specifically be a flashing light, and the flashing light is a red flashing light or a yellow flashing light. The alarm assembly 94 may be synchronously started when the ignition apparatus 93 is started, and send an alarm signal after being started, that is, the alarm assembly 94 may be started by the trigger apparatus 92, may be manually turned off or turned off by a control system in an upper controller after being started, and may also be passively turned off after ignition of the ignition apparatus 93 is completed. In addition, the first exhaust pipe 911 or the second exhaust pipe 912 is provided with a top cover 95, the top cover 95 is hinged to the first exhaust pipe 911 or the second exhaust pipe 912, and may be opened by airflow when the thermal runaway flue gas passes, and the top cover 95 plays a waterproof role when being not opened to prevent external impurities or water vapor from entering the exhaust pipe 91. The alarm assembly 94 may achieve real-time monitoring, may timely monitor changes in the battery pressure caused by the thermal runaway, and timely give a prompt, so that monitoring may be achieved and the alarm signal may be sent at the early stage of the thermal runaway in the battery. After timely monitoring and alarm, the alarm assembly 94 may effectively reduce casualties and secondary safety accidents caused by the thermal runaway of other batteries due to high temperature, thereby further reducing the property loss.

In the embodiment, the first exhaust pipe 911 or the second exhaust pipe 912 may be provided with a sealing plug, and the sealing plug is arranged at the outlet of the first exhaust pipe 911 or the second exhaust pipe 912, and may be pushed out or ejected when the thermal runaway flue gas passes. Alternatively, the first exhaust pipe 911 or the second exhaust pipe 912 may be provided with the top cover 95, and the top cover 95 is hinged to the first exhaust pipe 911 or the second exhaust pipe 912, and may be opened when the thermal runaway flue gas passes, so as to play a waterproof role.

### Embodiment 24

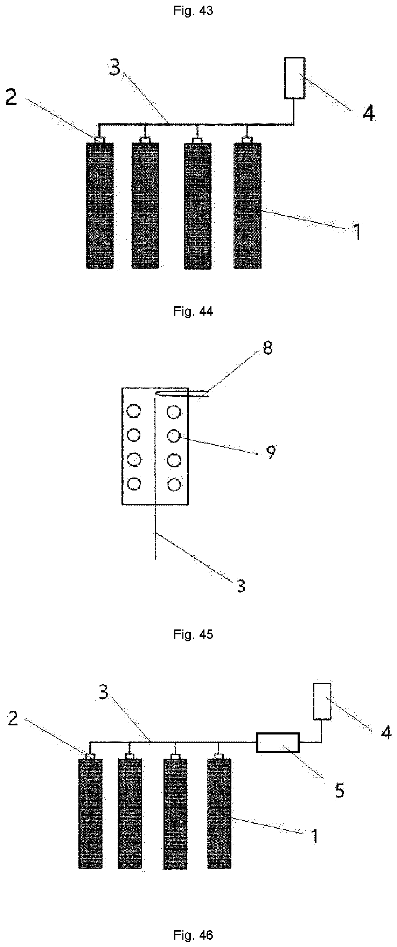

As shown in Fig. 44, a battery provided in the embodiment includes at least one single battery 1, an explosion venting mechanism 2, a manifold 3, and an ignition apparatus 4. The explosion venting mechanism 2 is fixed to the single battery 1, and is configured to release thermal runaway flue gas generated by thermal runaway in the single battery. One end of the manifold 3 is fixedly connected to the explosion venting mechanism 2 to convey the thermal runaway flue gas. The ignition apparatus 4 is fixedly connected to the other end of the manifold 3 to ignite the thermal runaway flue gas conveyed by the manifold 3. The ignition apparatus 43 is a pulse igniter. The ignition apparatus 4 further includes an air inlet for introducing air and mixing with the thermal runaway flue gas. When the number of the single batteries is greater than 1, the manifold 3 is connected to the single battery in parallel.

In the embodiment, the plurality of single batteries 1 may be arranged side by side to form a lithium ion battery, and the ignition apparatus 4 may be arranged away from the single battery 1 to prevent the combustion of the thermal runaway flue gas from damaging the single battery 1 during ignition. The thermal runaway flue gas generated by the thermal runaway in the single battery includes, but is not limited to, flammable gas such as hydrogen, carbon monoxide, and methane, so that the manifold 3 is made of materials resistant to high temperature, high pressure, and corrosion.

The gas outlet of the explosion venting mechanism 2 may be arranged directionally, and may only convey the thermal runaway flue gas from the inside of the single battery 1 to the manifold 3, and may not convey the thermal runaway flue gas from the manifold 3 to the single battery 1. The thermal runaway flue gas generated by the single battery 1 is opened by directional explosion when reaching a certain threshold. Each single battery is provided with the explosion venting mechanism 2. When the thermal runaway flue gas is generated in any single battery due to the thermal runaway to enter the manifold 3 through the explosion venting mechanism 2, other single batteries 1 still operate normally.

As shown in Fig. 45, in the embodiment, the ignition apparatus 4 includes an igniter 8 and an air inlet 9. When the thermal runaway flue gas is conveyed from the manifold 3 to the ignition apparatus 4, the thermal runaway flue gas is sprayed out, and the air enters from the air inlet 9 and is mixed with the thermal runaway flue gas, the igniter ignites a mixture of the thermal runaway flue gas and the air, and the thermal runaway flue gas is subjected to harmless treatment conveniently, simply, and efficiently to avoid fire or environmental pollution. The igniter 8 may be a pulse igniter or an electric igniter controlled by a battery management system.

### Embodiment 25

As shown in Fig. 46, a battery provided in the embodiment includes at least one single battery 1, a manifold 3, an ignition apparatus 4, and an explosion venting mechanism 2 on the basis of Embodiment 24. The manifold 3 is further fixedly provided with an anti-backfire apparatus 5 in front of the ignition apparatus 4, which is configured to prevent the ignited thermal runaway flue gas from being reversely combusted into the manifold 3. The ignition apparatus 4 is fixedly connected to the other end of the manifold 3, and is configured to ignite the thermal runaway flue gas conveyed by the manifold 3. The ignition apparatus 4 is a pulse igniter. The ignition apparatus 4 further includes an air inlet for introducing air and mixing with the thermal runaway flue gas. When the number of the single batteries is greater than 1, the manifold 3 is connected to the single battery in parallel.

### Embodiment 26

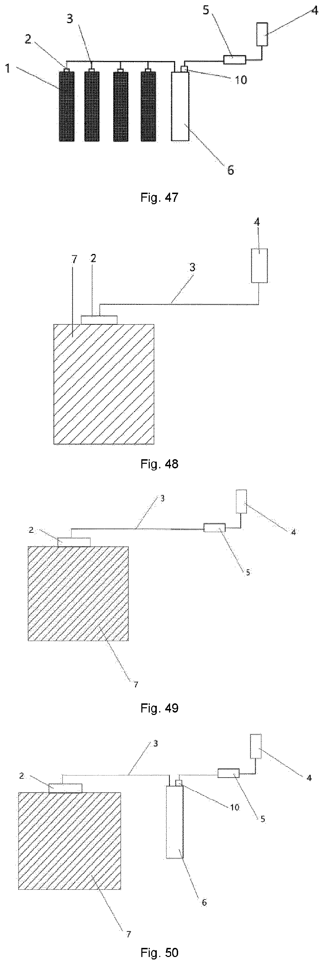

As shown in Fig. 46 and Fig. 47, a battery provided in the embodiment includes at least one single battery 1, a manifold 3, an ignition apparatus 4, and an explosion venting mechanism 2. The explosion venting mechanism 2 is fixed to the single battery 1, and is configured to release thermal runaway flue gas generated by thermal runaway in the single battery. One end of the manifold 3 is fixedly connected to the explosion venting mechanism 2 to convey the thermal runaway flue gas. The manifold 3 is further fixedly provided with an anti-backfire apparatus 5, configured to prevent the ignited thermal runaway flue gas from being reversely combusted into the manifold 3. The ignition apparatus 4 is fixedly connected to the other end of the manifold 3, and is configured to ignite the thermal runaway flue gas conveyed by the manifold 3. A buffer apparatus 6 is further fixedly arranged in front of the anti-backfire apparatus 5, and the buffer apparatus further includes a pressure relief valve 10. The opening pressure of the pressure relief valve 10 is less than the opening pressure of the explosion venting valve of the battery, and when the thermal runaway flue gas accumulates in the buffer apparatus 6 through the manifold 3 to reach a certain pressure, the pressure relief valve 10 is opened, and the thermal runaway flue gas reaches the ignition apparatus 4 through the pressure relief valve. The ignition apparatus 43 is a pulse igniter. The ignition apparatus 4 further includes an air inlet for introducing air and mixing with the thermal runaway flue gas. When the number of the single batteries is greater than 1, the manifold 3 is connected to the single battery in parallel.

In the embodiment, the plurality of single batteries 1 may be arranged side by side to form a lithium ion battery, and the ignition apparatus 4 may be arranged away from the single battery 1 to avoid the combustion of the thermal runaway flue gas from damaging the single battery 1 during ignition. In the embodiment, the buffer apparatus 6 is an elastic bag or a pressure container, which may bear a certain pressure to avoid the thermal runaway flue gas from being too low in concentration and failing to be ignited when reaching the ignition apparatus 4. The thermal runaway flue gas generated by the thermal runaway in the single battery includes, but is not limited to, flammable gas such as hydrogen, carbon monoxide, and methane, so that the manifold 3 is made of materials resistant to high temperature, high pressure, and corrosion.

### Embodiment 27

As shown in Fig. 48, a battery pack provided in the embodiment includes a box body 7 and a plurality of lithium ion batteries placed in the box body 7 and connected in series or in parallel, and further includes an explosion venting mechanism 2. The explosion venting mechanism 2 may be a pressure valve or a communicating pipe fixed to the box body 7, and the explosion venting mechanism 2 is configured to release thermal runaway flue gas generated by thermal runaway in the battery. One end of the manifold 3 is fixedly connected to the explosion venting mechanism 2 to convey the thermal runaway flue gas. The ignition apparatus 4 is fixedly connected to the other end of the manifold 3 to ignite the thermal runaway flue gas conveyed by the manifold 3. The ignition apparatus 43 is a pulse igniter. The ignition apparatus 4 further includes an air inlet for introducing air and mixing with the thermal runaway flue gas.

In the embodiment, the ignition apparatus 4 may be arranged away from the box body 7 to avoid the combustion of the thermal runaway flue gas from damaging the battery during ignition. The thermal runaway flue gas generated by the thermal runaway in the battery includes, but is not limited to, flammable gas such as hydrogen, carbon monoxide, and methane, so that the manifold 3 is made of materials resistant to high temperature, high pressure, and corrosion. The gas outlet of the explosion venting mechanism 2 may be arranged directionally, and may only convey the thermal runaway flue gas from the inside of the box body 7 to the manifold 3, and may not convey the thermal runaway flue gas from the manifold 3 to the box body 7. The thermal runaway flue gas generated by the box body 7 is opened by directional explosion when reaching a certain threshold.

As shown in Fig. 45, in the embodiment, the ignition apparatus 4 includes an igniter 8 and an air inlet 9. When the thermal runaway flue gas is conveyed from the manifold 3 to the ignition apparatus 4, the thermal runaway flue gas is sprayed out, and the air enters from the air inlet 9 and is mixed with the thermal runaway flue gas, the igniter ignites a mixture of the thermal runaway flue gas and the air, and the thermal runaway flue gas is subjected to harmless treatment conveniently, simply, and efficiently to avoid fire or environmental pollution.

### Embodiment 28

As shown in Fig. 49, a battery pack of the embodiment includes a box body 7 and a plurality of lithium ion batteries placed in the box body 7 and connected in series or in parallel, and further includes an explosion venting mechanism 2. The explosion venting mechanism 2 may be a pressure valve or a communicating pipe fixed to the box body 7, and the explosion venting mechanism 2 is configured to release thermal runaway flue gas generated by thermal runaway in the battery. One end of the manifold 3 is fixedly connected to the explosion venting mechanism 2 to convey the thermal runaway flue gas. The manifold 3 is further fixedly provided with an anti-backfire apparatus 5, configured to prevent the ignited thermal runaway flue gas from being reversely combusted into the manifold 3. The ignition apparatus 4 is fixedly connected to the other end of the manifold 3 to ignite the thermal runaway flue gas conveyed by the manifold 3. The ignition apparatus 4 is a pulse igniter. The ignition apparatus 4 further includes an air inlet for introducing air and mixing with the thermal runaway flue gas. When the number of the battery packs is greater than 1, the manifold 3 is connected to the battery packs in parallel.

In the embodiment, the ignition apparatus 4 may be arranged away from the box body 7 to avoid the combustion of the thermal runaway flue gas from damaging the battery during ignition. The thermal runaway flue gas generated by the thermal runaway in the battery includes, but is not limited to, flammable gas such as hydrogen, carbon monoxide, and methane, so that the manifold 3 is made of materials resistant to high temperature, high pressure, and corrosion. The gas outlet of the explosion venting mechanism 2 may be arranged directionally, and may only convey the thermal runaway flue gas from the inside of the box body 7 to the manifold 3, and may not convey the thermal runaway flue gas from the manifold 3 to the box body 7. The thermal runaway flue gas generated by the box body 7 is opened by directional explosion when reaching a certain threshold.

### Embodiment 29

As shown in Fig. 50, a battery pack provided in the embodiment includes a box body 7 and a plurality of lithium ion batteries placed in the box body 7 and connected in series or in parallel, and further includes an explosion venting mechanism 2. The explosion venting mechanism 2 may be a pressure valve or a communicating pipe fixed to the box body 7, and the explosion venting mechanism 2 is configured to release thermal runaway flue gas generated by thermal runaway in the battery. One end of the manifold 3 is fixedly connected to the explosion venting mechanism 2 to convey the thermal runaway flue gas. The manifold 3 is further fixedly provided with an anti-backfire apparatus 5, configured to prevent the ignited thermal runaway flue gas from being reversely combusted into the manifold 3. The ignition apparatus 4 is fixedly connected to the other end of the manifold 3 to ignite the thermal runaway flue gas conveyed by the manifold 3. A buffer apparatus 6 is further fixedly arranged in front of the anti-backfire apparatus 5, and the buffer apparatus further includes a pressure relief valve 10. When the thermal runaway flue gas accumulates in the buffer apparatus 6 through the manifold 3 to reach a certain pressure, the pressure relief valve 10 is opened, and the thermal runaway flue gas reaches the ignition apparatus 4 through the pressure relief valve. The ignition apparatus 43 is a pulse igniter or other electric igniter. The ignition apparatus 4 further includes an air inlet for introducing air and mixing with the thermal runaway flue gas. When the number of the battery packs is greater than 1, the manifold 3 is connected to the battery packs in parallel.

In the embodiment, the ignition apparatus 4 may be arranged away from the box body 7 to avoid the combustion of the thermal runaway flue gas from damaging the battery during ignition. The buffer apparatus 6 is an elastic bag or a pressure container, which may bear a certain pressure to avoid the thermal runaway flue gas from being too low in concentration and failing to be ignited when reaching the ignition apparatus 4. The thermal runaway flue gas generated by the thermal runaway in the battery includes, but is not limited to, flammable gas such as hydrogen, carbon monoxide, and methane, so that the manifold 3 is made of materials resistant to high temperature, high pressure, and corrosion. The gas outlet of the explosion venting mechanism 2 may be arranged directionally, and may only convey the thermal runaway flue gas from the inside of the box body 7 to the manifold 3, and may not convey the thermal runaway flue gas from the manifold 3 to the box body 7. The thermal runaway flue gas generated by the box body 7 is opened by directional explosion when reaching a certain threshold.

## Claims

1. A thermal runaway flue gas treatment apparatus for battery, comprising a flue gas ignition apparatus, and the flue gas ignition apparatus is arranged at a flue gas outlet end of a lithium battery or a PACK box, and the flue gas ignition apparatus is configured to ignite the thermal runaway flue gas discharged by thermal runaway in the lithium battery or the PACK box.

2. The thermal runaway flue gas treatment apparatus for battery as claimed in claim 1, wherein the flue gas ignition apparatus comprises a pulse igniter.

3. The thermal runaway flue gas treatment apparatus for battery as claimed in claim 2, wherein the thermal runaway flue gas treatment apparatus for battery further comprises a trigger apparatus, the trigger apparatus triggers the flue gas ignition apparatus to ignite through the pressure of the thermal runaway flue gas discharged from the flue gas outlet end of the lithium battery or the PACK box.

4. The thermal runaway flue gas treatment apparatus for battery as claimed in claim 3, wherein the flue gas ignition apparatus and the trigger apparatus are both arranged in a combustion chamber at an outer side of the flue gas outlet end of the lithium battery or the PACK box, the trigger apparatus is arranged opposite to the flue gas outlet end, the flue gas ignition apparatus is arranged above the trigger apparatus, the combustion chamber is an inner chamber of the combustion box, and the combustion box is fixedly connected to the lithium battery or the PACK box.

5. The thermal runaway flue gas treatment apparatus for battery as claimed in claim 3, wherein the trigger apparatus comprises a pressure plug, and the pressure plug is arranged at the flue gas outlet end of the lithium battery or the PACK box.

6. The thermal runaway flue gas treatment apparatus for battery as claimed in claim 4, wherein the trigger apparatus comprises a longitudinal slide rod and a trigger block, and the longitudinal slide rod and the trigger block are placed in the inner chamber of the combustion box, and the longitudinal slide rod is fixedly connected to the lithium battery or the PACK box; the trigger block is sleeved on an outer side of the longitudinal slide rod, and the trigger block is slidably connected to the longitudinal slide rod; and the trigger block is arranged opposite to the flue gas outlet end of the lithium battery or the PACK box, and the flue gas ignition apparatus is arranged above the trigger block.

7. The thermal runaway flue gas treatment apparatus for battery as claimed in claim 6, wherein a lower end surface of the trigger block is a concave arc-shaped surface, the arc-shaped surface is arranged opposite to the flue gas outlet end of the lithium battery or the PACK box, the trigger block is made of a fire insulation material, the bottom of the trigger block is provided with an arc groove, and the arc groove is arranged opposite to the flue gas outlet end of the lithium battery or the PACK box.

8. The thermal runaway flue gas treatment apparatus for battery as claimed in claim 7, wherein the trigger apparatus further comprises a limited block and an elastic reset piece, and the limited block is fixedly connected to the top of the longitudinal slide rod, the limited block is connected to the trigger block through the elastic reset piece, and the limited block is fixedly connected to the flue gas ignition apparatus through a mounting rack.

9. The thermal runaway flue gas treatment apparatus for battery as claimed in claim 8, wherein the bottom of the flue gas ignition apparatus is provided with a press switch, the press switch is arranged opposite to the trigger block, the top of the trigger block is provided with an ejector block, and the ejector block is arranged opposite to the press switch.

10. The thermal runaway flue gas treatment apparatus for battery as claimed in claim 9, wherein the thermal runaway flue gas treatment apparatus for battery further comprises a flame-retardant thermal insulation board, and the combustion box and the longitudinal slide rod are fixedly connected to the lithium battery or the PACK box through the flame-retardant thermal insulation board, the flame-retardant thermal insulation board is provided with a communication hole, the combustion box communicates with the flue gas outlet end through the communication hole in the flame-retardant thermal insulation board, the flue gas outlet end is provided with a pressure relief assembly, and the pressure relief assembly penetrates through the flame-retardant thermal insulation board and extends into the combustion chamber of the combustion box; and the top of the combustion box is open.

11. The thermal runaway flue gas treatment apparatus for battery as claimed in claim 1, wherein the flue gas ignition apparatus comprises an exhaust cylinder, and a plurality of exhaust nozzles, a pressure valve, a ignition switch, and a ignition apparatus, and the plurality of exhaust nozzles are respectively fixedly connected to the exhaust cylinder to form an exhaust channel for the thermal runaway flue gas; the pressure valve and the ignition switch are arranged in the exhaust channel, the pressure valve comprises a piston, and the pressure valve seals the exhaust channel at normal pressure, so that the exhaust channel keeping closed; the piston in the pressure valve is driven by the gas pressure to move, the exhaust channel is opened, while the pressure valve presses against the ignition switch to turn on the ignition apparatus; and when the thermal runaway flue gas is generated in the battery, as the gas pressure gradually increases, the pistons in the plurality of pressure valves are sequentially pushed by gradually increaseing the gas pressure, the ignition switches are sequentially turned on, the ignition apparatuses are started, and the thermal runaway flue gas is ignited.

12. The thermal runaway flue gas treatment apparatus for battery as claimed in claim 11, wherein an anti-backfire valve is further arranged in the exhaust cylinder, and the pressure valve is provided with a gasket.

13. The thermal runaway flue gas treatment apparatus for battery as claimed in claim 11, wherein the exhaust cylinder and the exhaust nozzles are respectively fixedly arranged on a fixed cylinder to form a gas passage, so that the thermal runaway flue gas sequentially passes through the exhaust cylinder, the fixed cylinder and the exhaust nozzles.

14. The thermal runaway flue gas treatment apparatus for battery as claimed in claim 13, wherein the pressure valve is fixedly arranged in a joint of the fixed cylinder and the exhaust nozzle, the pressure valve is provided with a protrusion, the ignition switch is arranged in the exhaust nozzle, and when the piston of the pressure valve moves, the protrusion presses against the ignition switch, and the ignition apparatus is turned on.

15. The thermal runaway flue gas treatment apparatus for battery as claimed in claim 14, wherein the ignition apparatus is a pulse igniter.

16. The thermal runaway flue gas treatment apparatus for battery as claimed in claim 1, wherein the flue gas ignition apparatus comprises a first exhaust pipe, a second exhaust pipe, an ignition apparatus, and a magnetic switch, the second exhaust pipe, the magnetic switch, and the ignition apparatus are all N in number, and N is an integer greater than or equal to 1; inlets of the N second exhaust pipes are connected to an outlet of the first exhaust pipe; the N ignition apparatuses are arranged at outlets of the second exhaust pipes, and the N ignition apparatuses are configured to ignite the thermal runaway flue gas discharged by the second exhaust pipes; and the N magnetic switches are arranged on the N second exhaust pipes in a one-to-one correspondence manner, and the N magnetic switches are configured to send electrical signals to the ignition apparatuses when the thermal runaway flue gas passes through the second exhaust pipes, so that the ignition apparatuses are turned on to ignite the thermal runaway flue gas.

17. The thermal runaway flue gas treatment apparatus for battery as claimed in claim 16, wherein the magnetic switch is one of mechanical magnetic switch, gravity magnetic switch and magnetic switch, and the magnetic switch is a normally closed switch.

18. The thermal runaway flue gas treatment apparatus for battery as claimed in claim 16, wherein the thermal runaway flue gas treatment apparatus for battery further comprises N exhaust nozzles, where the exhaust nozzles are of a conical pipe structure, large ends of the N exhaust nozzles are connected to the outlets of the N second exhaust pipes in a one-to-one correspondence manner, and the N ignition apparatuses are arranged at outlets at small ends of the N exhaust nozzles in a one-to-one correspondence manner.

19. The thermal runaway flue gas treatment apparatus for battery as claimed in claim 16, wherein the first exhaust pipe is provided with an anti-backfire valve, the anti-backfire valve is configured to prevent backflow of the thermal runaway flue gas, the anti-backfire valve is a one-way valve, the ignition apparatus is a pulse igniter, an ignition head of the pulse igniter is arranged on the second exhaust pipe through a support, a battery or alternating current interface of the pulse igniter is arranged in a power box, and a signal line of the pulse igniter is connected to the power box through a waterproof joint in a sealed manner.

20. The thermal runaway flue gas treatment apparatus for battery as claimed in claim 1, wherein the flue gas ignition apparatus comprises a combustion chamber, an ignition apparatus and a trigger apparatus, and the ignition apparatus is arranged in the combustion chamber, the combustion chamber is configured to store the thermal runaway gas generated by the thermal runaway in the battery, the trigger apparatus is connected to the ignition apparatus, and the trigger apparatus activates the ignition apparatus to ignite the thermal runaway gas based on the pressure and/or temperature of the gas.

21. The thermal runaway flue gas treatment apparatus for battery as claimed in claim 20, wherein the trigger apparatus is a pressure switch and/or a temperature control switch or an electrical connector pressure gage.

22. The thermal runaway flue gas treatment apparatus for battery as claimed in claim 21, wherein the thermal runaway flue gas treatment apparatus for battery further comprises a thermal runaway flue gas exhaust pipe, and the combustion chamber is connected to an electrolyte chamber of the battery through the thermal runaway flue gas exhaust pipe; an explosion venting apparatus is arranged in a pipe chamber of the thermal runaway flue gas exhaust pipe, when the trigger apparatus is the pressure switch and/or the temperature control switch, the pressure switch and/or the temperature control switch are/is arranged between the explosion venting apparatus and the combustion chamber, and the pressure switch and the temperature control switch are connected in parallel or in series; and when the trigger apparatus is the electrical connector pressure gage, the electrical connector pressure gage is arranged between the electrolyte chamber of the battery and the combustion chamber, and a touch pressure of the electrical connector pressure gage is less than a explosion venting pressure of the explosion venting apparatus.

23. The thermal runaway flue gas treatment apparatus for battery as claimed in claim 22, wherein the ignition apparatus comprises an igniter and a power supply, and the igniter is placed inside the combustion chamber, and the power supply is arranged inside or outside the combustion chamber; and the power supply is electrically connected to the igniter and the trigger apparatus, and the trigger apparatus is electrically connected to the igniter.

24. The thermal runaway flue gas treatment apparatus for battery as claimed in claim 23, wherein the thermal runaway flue gas treatment apparatus for battery further comprises an anti-backfire apparatus arranged between the thermal runaway flue gas exhaust pipe and the combustion chamber and a wind shield arranged at the top of the combustion chamber, and a chamber wall of the combustion chamber is provided with an air inlet, the air inlet is configured to supplement combustion-supporting gas in the combustion chamber, the chamber wall of the combustion chamber is provided with a vent hole, and the vent hole is configured to discharge the remaining combusted gas.

25. The thermal runaway flue gas treatment apparatus for battery as claimed in claim 1, wherein the flue gas ignition apparatus comprises an igniter, a trigger apparatus and a flue gas pipeline, and the trigger apparatus comprises a control circuit board and a sensor, and the sensor is arranged on the flue gas pipeline or a battery housing, an output end of the sensor is connected to the control circuit board, which outputs a signal to the control circuit board during the thermal runaway in the battery, and the control circuit board outputs an ignition current according to the signal; and the igniter is an arc igniter or a resistance wire igniter, and the igniter is arranged on the flue gas pipeline, and is able to ignite the thermal runaway flue gas discharged from the flue gas pipeline under the ignition current output by the control circuit board.

26. The thermal runaway flue gas treatment apparatus for battery as claimed in claim 25, wherein the igniter is a resistance wire igniter, and the resistance wire igniter comprises an igniter housing and a resistance wire, and an ignition chamber communicating with the flue gas pipeline is arranged in the igniter housing, the resistance wire is arranged in the ignition chamber, and both ends of the resistance wire are connected to the control circuit board outside the igniter housing.

27. The thermal runaway flue gas treatment apparatus for battery as claimed in claim 25, wherein the igniter is an arc igniter, and the arc igniter comprises an igniter housing, a first electrode wire, and a second electrode wire, and an ignition chamber communicating with the flue gas pipeline is arranged in the igniter housing, one end of the first electrode wire and one end of the second electrode wire are arranged in the ignition chamber, an ionization gap is arranged between the two, and the other ends of the first electrode wire and the second electrode wire are arranged outside the igniter housing, and the other ends of the first electrode wire and the second electrode wire are connected to the control circuit board.

28. The thermal runaway flue gas treatment apparatus for battery as claimed in claim 26 or 27, wherein each of the arc igniter and the resistance wire igniter further comprises a ceramic chuck ring and a ceramic pressing ring, and a ring groove is formed in the ceramic chuck ring, and the resistance wire, the first electrode wire or the second electrode wire is arranged in the ring groove, and is pressed by the ceramic pressing ring.

29. The thermal runaway flue gas treatment apparatus for battery as claimed in claim 28, wherein the control circuit board is provided with an oscillating circuit, the oscillating circuit is configured to convert a direct current into an alternating current, and the igniter is an arc igniter, and a booster coil is arranged between the arc igniter and the control circuit board, and the booster coil is configured to boost and convey the alternating current output by the control circuit board to the first electrode wire and the second electrode wire.

30. The thermal runaway flue gas treatment apparatus for battery as claimed in claim 29, wherein the trigger apparatus comprises at least one of a pressure sensor, a gas sensor or a temperature sensor.

31. The thermal runaway flue gas treatment apparatus for battery as claimed in claim 1, wherein the thermal runaway flue gas treatment apparatus for battery further comprises a cooling adsorption unit, and the cooling adsorption unit comprises N cans which are sequentially connected in series, and the N cans are filled with cooling materials and/or adsorption materials for cooling and/or adsorption of the thermal runaway flue gas in the battery, where N is an integer greater than or equal to 1; and the flue gas ignition apparatus is arranged at an outlet end of the Nth can, and the flue gas ignition apparatus is configured to ignite the cooled and/or absorbed thermal runaway flue gas.

32. The thermal runaway flue gas treatment apparatus for battery as claimed in claim 31, wherein the N cans are linearly arranged in a row, or linearly arranged in a U shape, or linearly arranged in a V shape, or linearly arranged in an L shape, and X porous plates are arranged in each can, the two adjacent porous plates and an inner wall of the can form a cooling adsorption chamber, part or all of the cooling adsorption chamber is filled with the cooling material and/or the adsorption material, where X is an integer greater than or equal to 2, and the adjacent porous plates are axially connected through a connecting rod.

33. The thermal runaway flue gas treatment apparatus for battery as claimed in claim 32, wherein the adjacent cans are connected in series through an elbow pipe or a hose, a buffer return chamber for allowing the thermal runaway flue gas in the battery to pass is formed in the elbow pipe, the Nth can is further fixedly provided with an anti-backfire unit, a collection unit is further arranged between the Nth can and the flue gas ignition apparatus, and the flue gas ignition apparatus comprises a pulse igniter; and the flue gas ignition apparatus further comprises an air inlet for introducing air and mixing and igniting with the thermal runaway flue gas.

34. The thermal runaway flue gas treatment apparatus for battery as claimed in claim 1, wherein the thermal runaway flue gas treatment apparatus for battery further comprises a gas storage cabin, and a partition board is arranged in the gas storage cabin to separate the gas storage cabin into a first cabin and a second cabin that are closed; the first cabin comprises an intake pipe to enable the thermal runaway flue gas to enter the first cabin; the second cabin comprises an exhaust pipe to discharge the thermal runaway flue gas; the flue gas ignition apparatus comprises an ignition apparatus, a trigger apparatus, and an ignition switch, and the ignition apparatus is arranged at an outlet of the exhaust pipe; the partition board is provided with a pressure relief valve to enable the thermal runaway flue gas to enter the second cabin from the first cabin through the pressure relief valve; the trigger apparatus and the ignition switch are arranged on the gas storage cabin, the trigger apparatus penetrates through the partition board and is able to be pushed by the gas pressure, and the ignition switch is arranged in the second cabin and is able to be triggered and started by the trigger apparatus; when the gas pressure of the first cabin reaches a first threshold P₁, the thermal runaway flue gas enters the second cabin through the pressure relief valve, and reaches the outlet through the exhaust pipe; and when the gas pressure of the first cabin reaches a second threshold P₂, the trigger apparatus presses against the ignition switch, the ignition switch starts the ignition apparatus to combust the thermal runaway flue gas, and a value of the first threshold P₁ is not less than a value of the second threshold P₂.

35. The thermal runaway flue gas treatment apparatus for battery as claimed in claim 34, wherein the partition board is provided with a gasket to keep the first cabin and the second cabin airtight, the outlet of the exhaust pipe is provided with a check flow valve to control the flow of the thermal runaway flue gas, and the ignition apparatus is a pulse igniter.

36. The thermal runaway flue gas treatment apparatus for battery as claimed in claim 35, wherein the exhaust pipe is provided with at least two exhaust nozzles, the ignition apparatus comprises at least two ignition heads, and a support seat is arranged outside the gas storage cabin, and the support seat is configured to mount the ignition apparatus.

37. The thermal runaway flue gas treatment apparatus for battery as claimed in claim 1, wherein the thermal runaway flue gas treatment apparatus for battery further comprises a gas storage cabin, and the gas storage cabin comprises a gas inlet and an exhaust port to input and discharge the thermal runaway flue gas; the flue gas ignition apparatus is fixedly arranged at the exhaust port outside the gas storage cabin; the gas storage cabin is separated by a movable partition board into a first cabin and a second cabin that are independent from each other, the gas inlet is arranged in the first cabin, and the exhaust port is arranged in the second cabin; a switch assembly is further arranged in the second cabin, and the switch assembly comprises an ignition switch; and when the gas pressure in the first cabin increases, the movable partition board is pushed by the gas pressure in the first cabin and presses against the ignition switch to start the ignition apparatus, and the exhaust port is at least partially exposed to the first cabin to discharge the thermal runaway flue gas.

38. The thermal runaway flue gas treatment apparatus for battery as claimed in claim 37, wherein the first cabin and/or the second cabin is/are provided with an elastic assembly, the elastic assembly abuts between the first cabin and/or the second cabin and the movable partition board, the movable partition board is provided with a gasket to keep the first cabin and the second cabin airtight, the exhaust port is provided as a pipeline, a check flow valve is fixed to the pipeline to control the flow of the thermal runaway flue gas, and the ignition apparatus is a pulse igniter.

39. The thermal runaway flue gas treatment apparatus for battery as claimed in claim 38, wherein the gas storage cabin is a cylinder, the movable partition board comprises a base and a protrusion, and the protrusion is able to be inserted into the gas inlet to keep the gas inlet closed under normal pressure, and the base moves in an axial direction of the cylinder and a gap is formed between the base and the cylinder to allow the thermal runaway flue gas to pass through; and the base is further provided with the switch assembly, when the thermal runaway flue gas passes through the gas inlet, due to the increase in pressure, the protrusion is jacked up, while the switch assembly is pressed to start the ignition apparatus to ignite the thermal runaway flue gas.

40. The thermal runaway flue gas treatment apparatus for battery as claimed in claim 1, wherein the thermal runaway flue gas treatment apparatus for battery further comprises an alarm assembly; the flue gas ignition apparatus comprises an exhaust pipe, a trigger apparatus and an ignition apparatus, and the trigger apparatus is arranged on the exhaust pipe, and the trigger apparatus is configured to start the ignition apparatus when the thermal runaway flue gas passes through the exhaust pipe, the ignition apparatus is arranged at an outlet end of the exhaust pipe, and the ignition apparatus is configured to ignite the thermal runaway flue gas in the exhaust pipe; and the alarm assembly is configured to send an alarm signal when the ignition apparatus is started.

41. The thermal runaway flue gas treatment apparatus for battery as claimed in claim 40, wherein the alarm assembly is arranged on the flue gas ignition apparatus, and the alarm assembly comprises a sound alarm apparatus and/or a light alarm apparatus, and the sound alarm apparatus is a buzzer, the light alarm apparatus is a flashing light, and the flashing light is a red flashing light or a yellow flashing light.

42. The thermal runaway flue gas treatment apparatus for battery as claimed in claim 41, wherein the exhaust pipe comprises a first exhaust pipe and a second exhaust pipes, and the number of the second exhaust pipes, the number of the trigger apparatuses, and the number of the ignition apparatuses are all N; inlets of the N second exhaust pipes are connected to an outlet of the first exhaust pipe; the N ignition apparatuses are arranged at outlets of the second exhaust pipes; and the N trigger apparatuses are arranged on the N second exhaust pipes in a one-to-one correspondence manner, N is an integer greater than or equal to 1, the first exhaust pipe or the second exhaust pipe is provided with a top cover, the top cover is hinged to the first exhaust pipe or the second exhaust pipe, and the top cover is able to be opened when the thermal runaway flue gas passes, or the first exhaust pipe or the second exhaust pipe is provided with a sealing plug, and the sealing plug is arranged at the outlet of the first exhaust pipe or the second exhaust pipe, and the sealing plug is able to be ejected when the thermal runaway flue gas passes.

43. A battery group, comprising an explosion venting mechanism, a manifold, an ignition apparatus, and at least one single battery, and the explosion venting mechanism is fixed to the single battery to release thermal runaway flue gas generated by thermal runaway in the single battery; the manifold is fixedly connected to the explosion venting mechanism to convey the thermal runaway flue gas; and the ignition apparatus is fixedly connected to the manifold to ignite the thermal runaway flue gas conveyed by the manifold, and the ignition apparatus is the treatment apparatuses for the thermal runaway flue gas in the battery as claimed in any one of claims 1 to 42.

44. The battery group as claimed in claim 43, wherein the battery group further comprises a buffer apparatus, and the buffer apparatus is arranged in front of the ignition apparatus, the buffer apparatus is provided with a pressure relief valve, the manifold is further fixedly provided with an anti-backfire apparatus, the buffer apparatus is an elastic bag or a pressure container, and the ignition apparatus further comprises an air inlet for introducing air and mixing and igniting with the thermal runaway flue gas.

45. A battery pack, comprising a box body, an explosion venting mechanism, a manifold, an ignition apparatus, and a plurality of lithium ion batteries placed in the box body, and the explosion venting mechanism is fixed to the box body to release thermal runaway flue gas generated by thermal runaway in a lithium ion battery; the manifold is fixedly connected to the explosion venting mechanism to convey the thermal runaway flue gas; and the ignition apparatus is fixedly connected to the manifold to ignite the thermal runaway flue gas conveyed by the manifold, and the ignition apparatus is the treatment apparatuses for the thermal runaway flue gas in the battery as claimed in any one of claims 1 to 42.

46. The battery pack as claimed in claim 45, wherein the manifold is further fixedly provided with an anti-backfire apparatus, and the lithium ion battery further comprises a buffer apparatus arranged in front of the ignition apparatus; and the buffer apparatus is further provided with a pressure relief valve.

47. The battery pack as claimed in claim 45, wherein the ignition apparatus is a pulse igniter; and the ignition apparatus further comprises an air inlet for introducing air and mixing and igniting with the thermal runaway flue gas.

48. A treatment method for thermal runaway flue gas in a battery, comprising the following step: performing ignition treatment on flue gas generated by thermal runaway in a battery before the flue gas is discharged into the atmosphere.

49. The treatment method for the thermal runaway flue gas in the battery as claimed in claim 48, wherein ignition treatment is performed on the flue gas generated by the thermal runaway in the battery by the thermal runaway flue gas treatment apparatus for battery as claimed in any one of claims 1 to 42 before the flue gas is discharged into the atmosphere.

50. The treatment method for the thermal runaway flue gas in the battery as claimed in claim 49, wherein the performing ignition treatment on flue gas generated by thermal runaway in a battery before the flue gas is discharged into the atmosphere specifically comprises: pushing a trigger apparatus to approach a flue gas ignition apparatus under the action of the pressure of the flue gas discharged from the lithium battery or the PACK box until the trigger apparatus triggers the flue gas ignition apparatus to ignite the flue gas.

51. The treatment method for the thermal runaway flue gas in the battery as claimed in claim 50, wherein the treatment method for the thermal runaway flue gas in the battery specifically comprises the following steps: pushing a pressure plug out of a flue gas outlet end under the action of the pressure of the flue gas discharged from the lithium battery or the PACK box, and enabling the pressure plug to approach a press switch on the flue gas ignition apparatus until the press switch is turned on by the pressure plug, so that the flue gas ignition apparatus ignites the flue gas;
or the treatment method for the thermal runaway flue gas in the battery specifically comprises the following steps: pushing a trigger block to approach the flue gas ignition apparatus under the action of the pressure of the flue gas discharged from the lithium battery or the PACK box until an ejector block on the trigger block triggers a press switch on the flue gas ignition apparatus to be turned on, so that the flue gas ignition apparatus ignites the flue gas; and when the pressure of the flue gas discharged from the flue gas outlet end becomes small, enabling the trigger block to restore to an initial state under the action of an elastic reset piece.
